# EUROPEAN PATENT APPLICATION

(11) **EP 4 838 799 A1**
(43) Date of publication of application: **11.11.2026**
(21) Application number: 24915740.5
(22) Date of filing: 05.01.2024
(51) Int. Cl.: H04B 7/06, H04N 19/91, G06N 3/04

(54) **APPARATUS AND METHOD FOR ADAPTIVE CHANNEL INFORMATION FEEDBACK IN WIRELESS COMMUNICATION SYSTEM**

(71) Applicant: LG Electronics Inc., Yeongdeungpo-gu Seoul 07336 (KR)
(72) Inventor: JO, Minseok, Seoul 06772 (KR); KIM, Kijun, Seoul 06772 (KR); LEE, Kyungho, Seoul 06772 (KR); KANG, Jiwon, Seoul 06772 (KR); LEE, Sangrim, Seoul 06772 (KR); PARK, Haewook, Seoul 06772 (KR)
(74) Representative: Jung, Minkyu
(86) International application number: PCT/KR2024/000236
(87) International publication number: WO 2025/146848

(57) **Abstract**

The objective of the present disclosure is to adaptively feed back channel information in a wireless communication system, and an operation method of a user equipment may comprise the steps of: receiving configuration information related to channel state information (CSI) feedback; receiving reference signals on the basis of the configuration information; generating CSI feedback information on the basis of the reference signals; and transmitting the CSI feedback information.

## Description

### TECHNICAL FIELD

The following description relates to a wireless communication system, including a method for adaptive channel information feedback in the wireless communication system, and a device supporting the same.

### BACKGROUND ART

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier-frequency division multiple access (SC-FDMA) system, etc.

In particular, as many communication devices require a large communication capacity, an enhanced mobile broadband (eMBB) communication technology has been proposed compared to radio access technology (RAT). In addition, not only massive machine type communications (mMTC) for providing various services anytime anywhere by connecting a plurality of devices and things but also communication systems considering services/user equipments (UEs) sensitive to reliability and latency have been proposed. To this end, various technical configurations have been proposed.

### DISCLOSURE

### TECHNICAL PROBLEM

The present disclosure may provide a method for effectively feeding back channel state information (CSI) in a wireless communication system and a device supporting the same.

The present disclosure may provide a method for adaptively controlling a feedback transmission rate (feedback rate) of CSI in a wireless communication system and a device supporting the same.

The present disclosure may provide a method for performing CSI feedback using temporal correlation in a wireless communication system and a device supporting the same.

The present disclosure may provide a method for generating side information necessary to reconstruct channel information and information representing a channel in a wireless communication system and a device supporting the same.

The present disclosure may provide a method for encoding and decoding channel information based on statistical information about the channel information in a wireless communication system and a device supporting the same.

The present disclosure may provide a method for generating prior information for channel information in a wireless communication system and a device supporting the same.

The present disclosure may provide a method for determining Doppler information of a channel in a data-driven manner in a wireless communication system and a device supporting the same.

The present disclosure may provide a method for providing a framework for feeding back a channel instance represented in an image format in a wireless communication system and a device supporting the same.

The present disclosure may provide a method for providing a framework for encoding and decoding, by using the temporal correlation of a channel, channel information measured using a reference signal in a wireless communication system and a device supporting the same.

The present disclosure may provide a method for providing a framework for feeding back channel information measured by using a reference signal at a variable transmission rate based on statistical information related to a channel in a wireless communication system and a device supporting the same.

The technical objects to be achieved in the present disclosure are not limited to the above-mentioned technical objects, and other technical objects that are not mentioned may be considered by those skilled in the art through the embodiments of the present disclosure described below.

### TECHNICAL SOLUTION

As an example of the present disclosure, provided is a method performed by a user equipment (UE) in a wireless communication system. The method may comprise: receiving configuration information related to channel state information (CSI) feedback; receiving reference signals based on the configuration information; generating CSI feedback information based on the reference signals; and transmitting the CSI feedback information, wherein the CSI feedback information may include channel information determined based on the reference signals, information related to temporal correlation of the channel information, and information for fine-tuning the channel information and the information related to the temporal correlation.

As an example of the present disclosure, provided is a method performed by a base station in a wireless communication system. The method may comprise: transmitting configuration information related to channel state information (CSI) feedback; transmitting reference signals based on the configuration information; receiving CSI feedback information based on the reference signals; and restoring channel information based on the CSI feedback information, wherein the CSI feedback information may include channel information determined based on the reference signals, information related to temporal correlation of the channel information, and information for fine-tuning the channel information and the information related to the temporal correlation.

As an example of the present disclosure, provided is a UE in a wireless communication system. The UE may comprise: a transceiver; and a processor connected to the transceiver, wherein the processor is configured to: receive configuration information related to channel state information (CSI) feedback; receive reference signals based on the configuration information; generate CSI feedback information based on the reference signals; and transmit the CSI feedback information, wherein the CSI feedback information may include channel information determined based on the reference signals, information related to temporal correlation of the channel information, and information for fine-tuning the channel information and the information related to the temporal correlation.

As an example of the present disclosure, provided is a base station in a wireless communication system. The base station may comprise: a transceiver; and a processor connected to the transceiver, wherein the processor is configured to: transmit configuration information related to channel state information (CSI) feedback; transmit reference signals based on the configuration information; receive CSI feedback information based on the reference signals; and restore channel information based on the CSI feedback information, wherein the CSI feedback information may include channel information determined based on the reference signals, information related to temporal correlation of the channel information, and information for fine-tuning the channel information and the information related to the temporal correlation.

As an example of the present disclosure, provided is a communication device. The communication device may comprise: at least one processor; at least one computer memory connected to the at least one processor and storing instructions for instructing operations based on being executed by the at least one processor, wherein the operations comprise: receiving configuration information related to channel state information (CSI) feedback; receiving reference signals based on the configuration information; generating CSI feedback information based on the reference signals; and transmitting the CSI feedback information, wherein the CSI feedback information may include channel information determined based on the reference signals, information related to temporal correlation of the channel information, and information for fine-tuning the channel information and the information related to the temporal correlation.

As an example of the present disclosure, provided is a non-transitory computer-readable medium storing at least one instruction. The non-transitory computer-readable medium may comprise: the at least one instruction executable by a processor, wherein the at least one instruction controls a device to: receive configuration information related to channel state information (CSI) feedback; receive reference signals based on the configuration information; generate CSI feedback information based on the reference signals; and transmit the CSI feedback information, wherein the CSI feedback information may include channel information determined based on the reference signals, information related to temporal correlation of the channel information, and information for fine-tuning the channel information and the information related to the temporal correlation.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.

### ADVANTAGEOUS EFFECTS

As is apparent from the above description, the embodiments of the present disclosure have the following effects.

Based on the present disclosure, channel information can be effectively fed back.

It will be appreciated by those skilled in the art that the effects that can be achieved through the embodiments of the present disclosure are not limited to those described above, and that other advantageous effects of the present disclosure will be more clearly understood from the following detailed description. That is, unintended effects according to implementation of the present disclosure may be derived by those skilled in the art from the embodiments of the present disclosure.

### BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.
FIG. 1 shows an example of a communication system applicable to the present disclosure.
FIG. 2 shows an example of a wireless device applicable to the present disclosure.
FIG. 3 shows a method of processing a transmitted signal applicable to the present disclosure.
FIG. 4 shows a communication procedure between a terminal and a base station applicable to the present disclosure.
FIG. 5 shows an example of a communication structure providable in a 6th generation (6G) system applicable to the present disclosure.
FIG. 6 shows an electromagnetic spectrum applicable to the present disclosure.
FIG. 7 shows a THz wireless communication transceiver applicable to the present disclosure.
FIG. 8 shows a THz signal generation method applicable to the present disclosure.
FIG. 9 shows a wireless communication transceiver applicable to the present disclosure.
FIG. 10 shows a transmitter structure applicable to the present disclosure.
FIG. 11 shows a modulator structure applicable to the present disclosure.
FIG. 12 shows a perceptron structure included in an artificial neural network applicable to the present disclosure.
FIG. 13 shows an artificial neural network structure applicable to the present disclosure.
FIG. 14 shows an example of a functional framework for applying artificial intelligence technology applicable to the present disclosure.
FIG. 15 shows an example of a procedure for utilizing an artificial intelligence model applicable to the present disclosure.
FIG. 16 shows another example of a procedure for utilizing an artificial intelligence model applicable to the present disclosure.
FIG. 17 shows another example of a procedure for utilizing an artificial intelligence model applicable to the present disclosure.
FIG. 18 shows a communication procedure based on an AI technology applicable to the present disclosure.
FIG. 19 shows an example neural network structure for channel state information (CSI) feedback.
FIG. 20 shows an example of a CSI matrix processing process in a neural network for channel state information feedback.
FIG. 21 shows another example of a neural network structure for channel state information feedback.
FIG. 22 shows the concept of CSI feedback supporting a variable feedback transmission rate.
FIG. 23 shows an example of distortion imbalance between channel state information matrix instances.
FIG. 24 shows an example of a procedure for channel state information feedback supporting a variable transmission rate.
FIG. 25a shows an example of the structure of a transmitter based on an embodiment of the present disclosure.
FIG. 25b shows an example of the structure of a receiver based on an embodiment of the present disclosure.
FIG. 26a shows an example of the structure of a transmitter using Doppler estimation and entropy coding based on an embodiment of the present disclosure.
FIG. 26b shows a more detailed example of the structure of a receiver utilizing Doppler estimation and entropy coding based on an embodiment of the present disclosure.

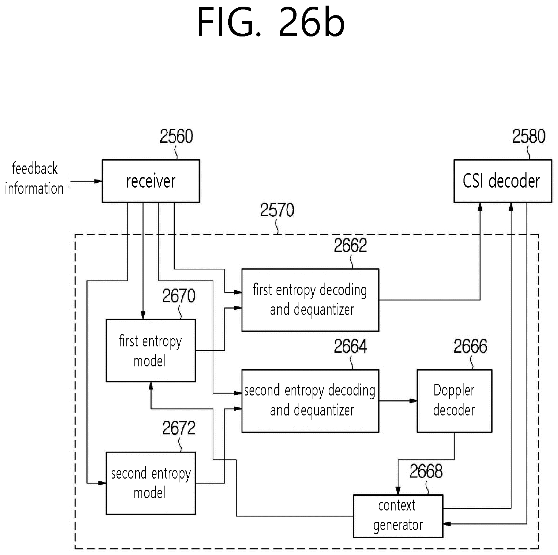

FIG. 26b shows a more detailed example of the structure of a receiver utilizing Doppler estimation and entropy coding based on an embodiment of the present disclosure.

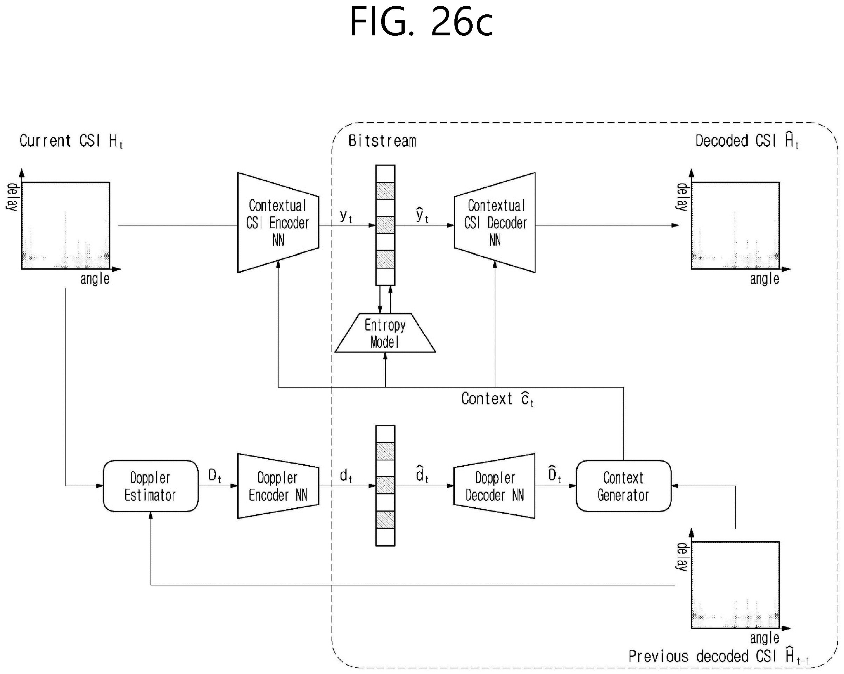

FIG. 26c shows an example of the conceptual structure of the transmitter and the receiver based on an embodiment of the present disclosure.

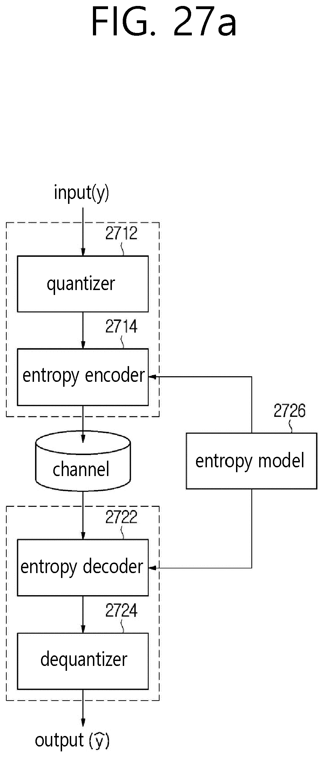

FIG. 27a shows an example of an entropy bottleneck layer for entropy encoding/decoding based on an embodiment of the present disclosure.

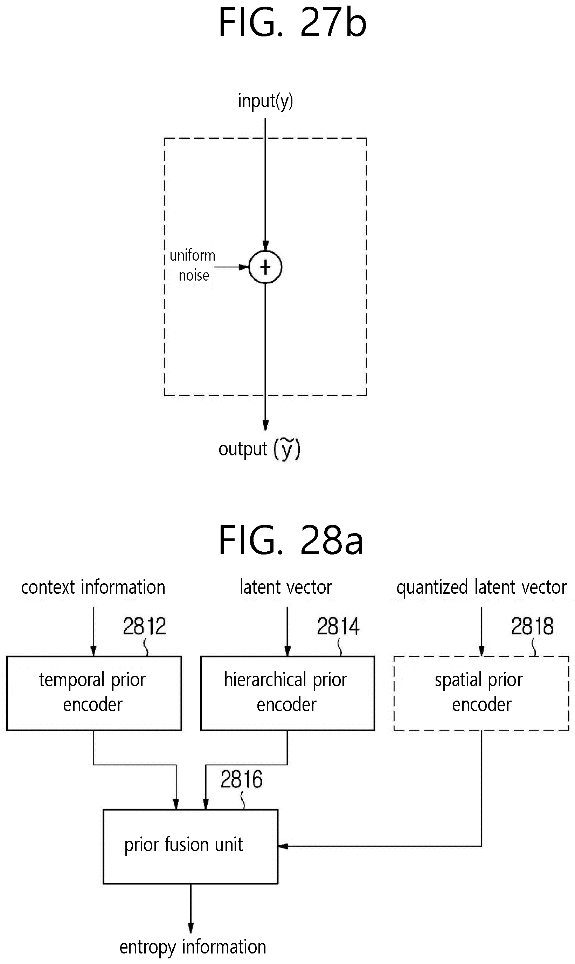

FIG. 27b shows an example of a structure for training the bottleneck layer based on an embodiment of the present disclosure.
FIG. 28a shows an example of an entropy model based on an embodiment of the present disclosure.

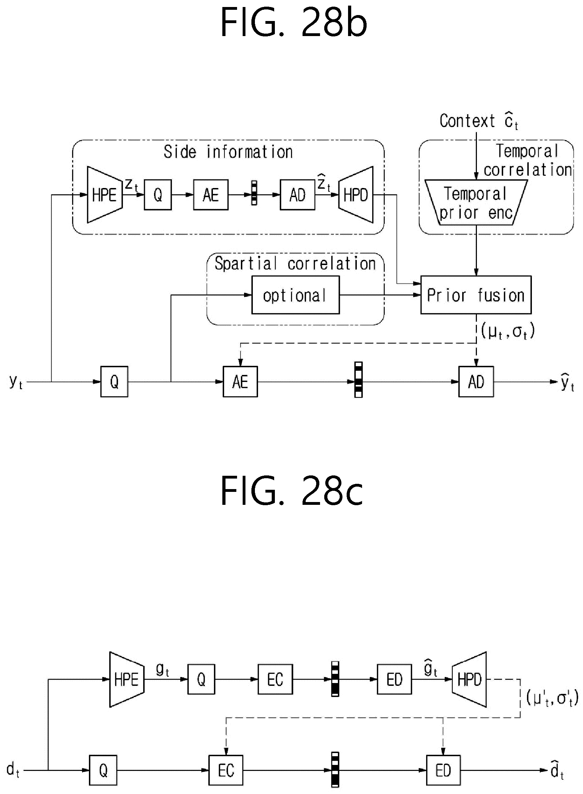

FIG. 28b shows an example of an entropy model that operates based on a channel latent vector based on an embodiment of the present disclosure.
FIG. 28c shows an example of an entropy model operating based on a Doppler latent vector based on an embodiment of the present disclosure.

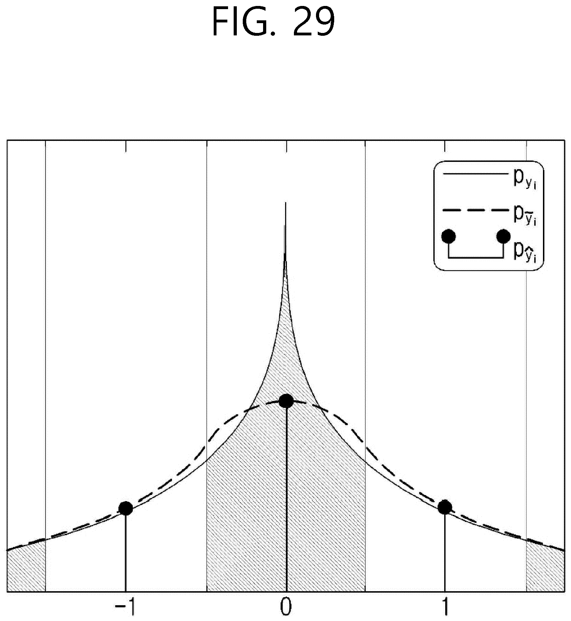

FIG. 29 shows an example of elements in a code space, the quantization results of the elements, and the probability distribution of the elements combined with noise.

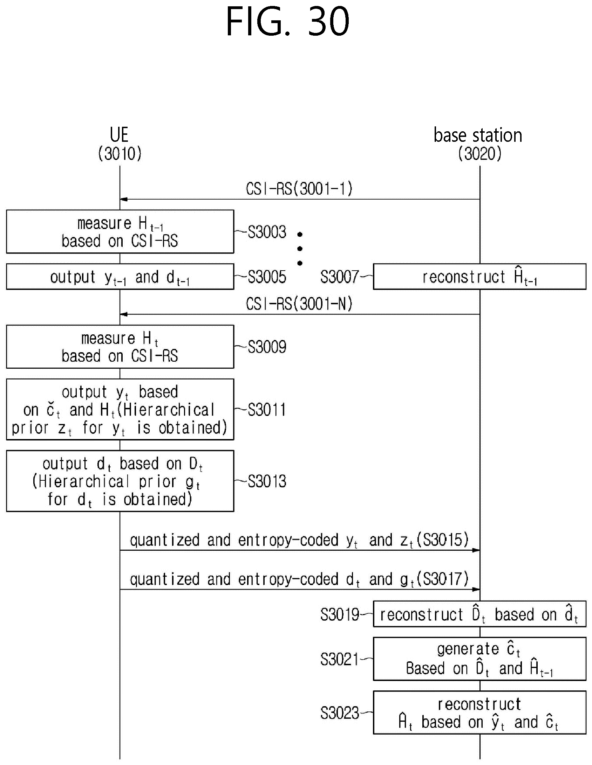

FIG. 30 shows an example of a CSI feedback procedure based on an embodiment of the present disclosure.

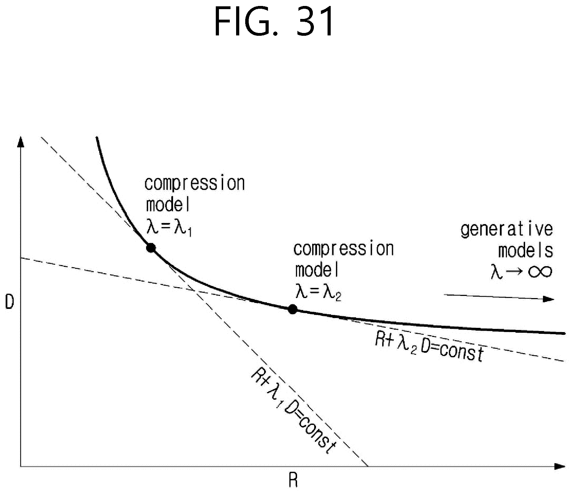

FIG. 31 shows an example of the rate-distortion trade-off in a compression model.

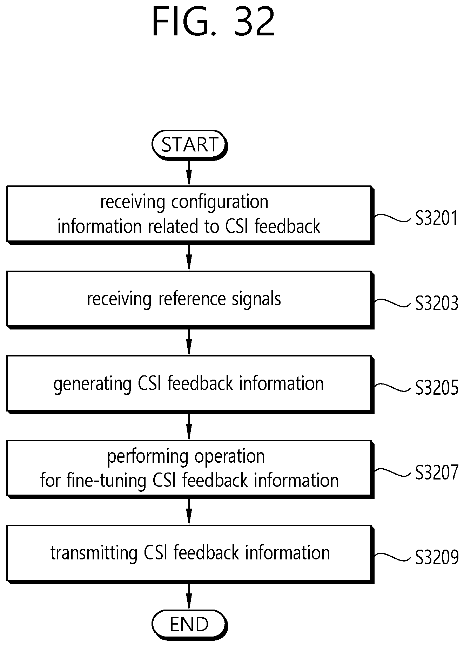

FIG. 32 shows an example of a procedure for transmitting a CSI based on an embodiment of the present disclosure.

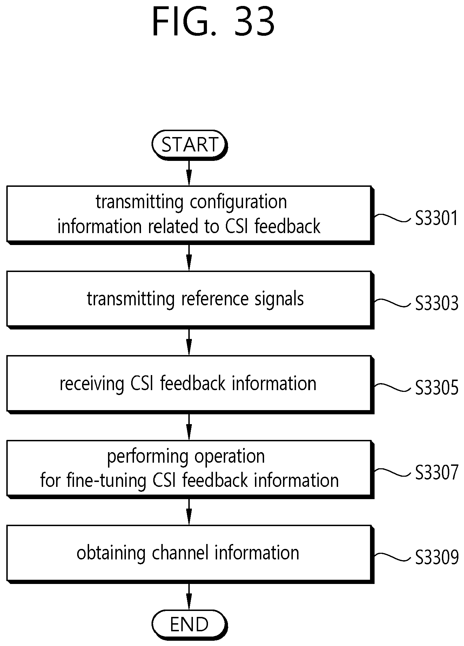

FIG. 33 shows an example of a procedure for generating CSI feedback information based on an embodiment of the present disclosure.

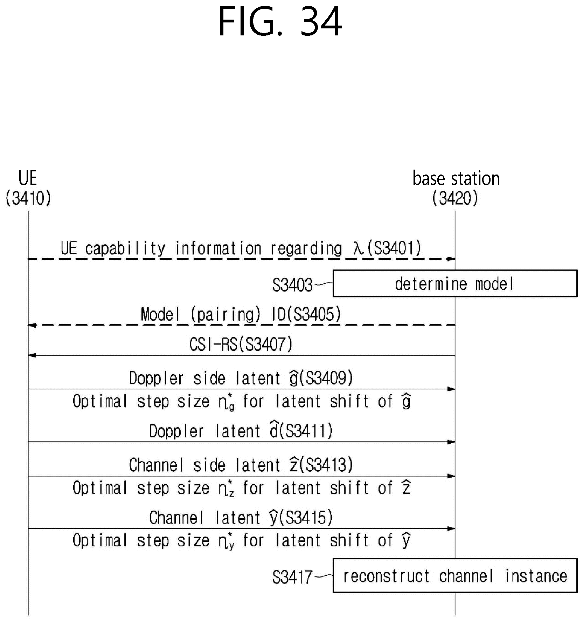

FIG. 34 shows an example of a procedure for obtaining CSI including fine-tuning based on an embodiment of the present disclosure.

### MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, the embodiment(s) of the present disclosure may be constructed by combining parts of the elements and/or features. Operation orders described in the embodiment(s) of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNB (eNode B), a gNB (gNode B), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP technical specification (TS) 38.211, 3GPP TS 38.212, 3GPP TS 38.213, 3GPP TS 38.321 and 3GPP TS 38.331.

In addition, the embodiments of the present disclosure may be applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

### Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

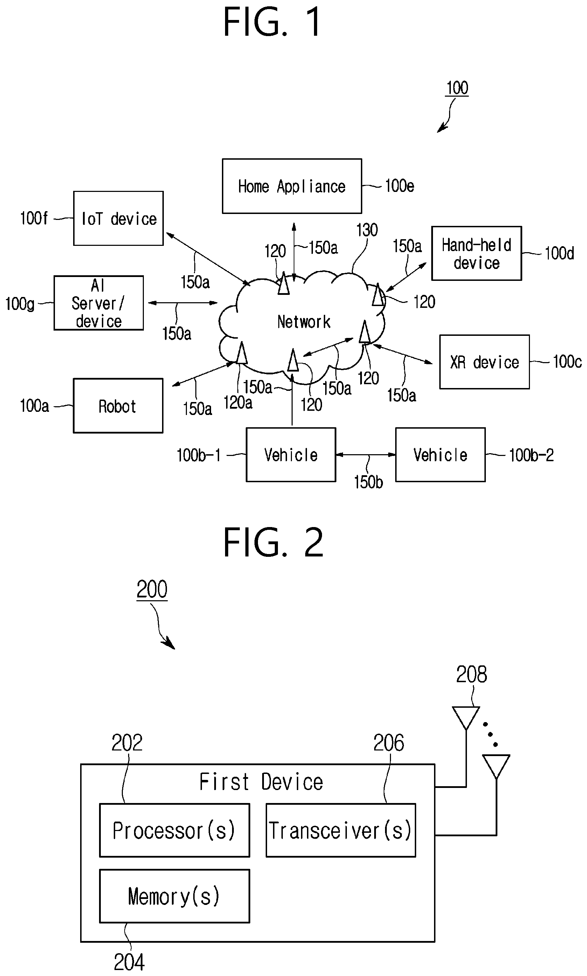

FIG. 1 shows an example of a communication system applicable to the present disclosure.

Referring to FIG. 1, the communication system 100 applicable to the present disclosure includes a wireless device, a base station and a network. The wireless device refers to a device for performing communication using radio access technology (e.g., LTE, LTE-A, LTE-A pro, NR or 5G, 5G-A, 6G) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network, a 5G (e.g., NR) network or a 6G network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/ connections 150a, 150b, 150c may be established between the wireless
devices 100a to 100f/the base station 120 and the base station 120/the base station 120. Here, wireless communication/connection may be established through various radio access technologies such as uplink/downlink communication 150a, sidelink communication 150b (or D2D communication) or communication 150c between base stations (e.g., relay, integrated access backhaul (IAB). The wireless device and the base station/wireless device, the base station and the base station may transmit/receive radio signals to/from each other through wireless communication/ connection 150a, 150b, 150c. For example, wireless communication/ connection 150a, 150b, 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

### Device Applicable to the Present Disclosure

FIG. 2 shows an example of a wireless device applicable to the present disclosure.

Referring to FIG. 2, a wireless device 200 may transmit and receive radio signals through various radio access technologies (e.g., LTE, LTE-A, LTE-A pro, NR, 5G, 5G-A, 6G). The wireless device 200 includes at least one processor 202 and at least one memory 204, and may further include at least one transceiver 206 and/or at least one antenna 208.

The processor 202 may be configured to control the memory 204 and/or the transceiver 206 and to implement descriptions, functions, procedures, proposals, methods and/or operational flowcharts disclosed herein. For example, the processor 202 may process information in the memory 204 to generate first information/signal and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be coupled with the processor 202, and store a variety of information related to operation of the processor 202. For example, the memory 204 may store software code including instructions for performing all or some of the processes controlled by the processor 202 or performing the descriptions, functions, procedures, proposals, methods and/or operational flowcharts disclosed herein. Here, the processor 202 and the memory 204 may be part of a communication modem/circuit/chip designed to implement wireless communication technology.
The transceiver 206 may be coupled with the processor 202 to transmit and/or receive radio signals through at least one antenna 208. The transceiver 206 may include a transmitter and/or a receiver. The transceiver 206 may be used interchangeably with a radio frequency (RF) unit. In the present disclosure, the wireless device may refer to a communication modem/circuit/chip.

Hereinafter, hardware elements of the wireless device 200 will be described in greater detail. Without being limited thereto, at least one protocol layer may be implemented by at least one processor 202. For example, at least one processor 202 may implement at least one layer (e.g., functional layers such as physical (PHY), media access control (MAC), radio link control (RLC), packet data convergence protocol (PDCP), radio resource control (RRC), service data adaptation protocol (SDAP)). At least one processor 202 may generate at least one protocol data unit (PDU) and/or at least one service data unit (SDU) according to the descriptions, functions, procedures, proposals, methods and/or operational flowcharts disclosed herein. At least one processor 202 may generate messages, control information, data or information according to the descriptions, functions, procedures, proposals, methods and/or operational flowcharts disclosed herein. At least one processor 202 may generate PDUs, SDUs, messages, control information, data or information according to the functions, procedures, proposals and/or methods disclosed herein and provide the PDUs, SDUs, messages, control information, data or information to at least one transceiver 206. At least one processor 202 may receive signals (e.g., baseband signals) from at least one transceiver 206 and acquire PDUs, SDUs, messages, control information, data or information according to the descriptions, functions, procedures, proposals, methods and/or operational flowcharts disclosed herein.

At least one processor 202 may be referred to as controllers, microcontrollers, microprocessors or microcomputers. At least one processor 202 may be implemented by hardware, firmware, software or a combination thereof. For example, at least one application specific integrated circuit (ASIC), at least one digital signal processor (DSP), at least one digital signal processing device (DSPD), at least one programmable logic device (PLD) or at least one field programmable gate array (FPGAs) may be included in at least one processor 202. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in at least one processor 202 or stored in at least one memory 204 to be driven by at least one processor 202. The descriptions, functions, procedures, proposals, methods and/or operational flowcharts disclosed herein implemented using firmware or software in the form of code, a command and/or a set of commands.

At least one memory 204 may be coupled with at least one processor 202 to store various types of data, signals, messages, information, programs, code, instructions and/or commands. At least one memory 204 may be composed of read only memories (ROMs), random access memories (RAMs), erasable programmable read only memories (EPROMs), flash memories, hard drives, registers, cache memories, computer-readable storage mediums and/or combinations thereof. At least one memory 204 may be located inside and/or outside at least one processor 202. In addition, at least one memory 204 may be coupled with at least one processor 202 through various technologies such as wired or wireless connection.

At least one transceiver 206 may transmit user data, control information, radio signals/channels, etc. described in the methods and/or operational flowcharts of the present disclosure to at least one other device. At least one transceiver 206 may receive user data, control information, radio signals/channels, etc. described in the methods and/or operational flowcharts of the present disclosure from at least one other device. For example, at least one transceiver 206 may be coupled with at least one processor 202 to transmit/receive radio signals. For example, at least one processor 202 may perform control such that at least one transceiver 206 transmit user data, control information or radio signals to at least one other device. In addition, at least one processor 202 may perform control such that at least one transceiver 206 receive user data, control information or radio signals from at least one other device. In addition, at least one transceiver 206 may be coupled with at least one antenna 208, and at least one transceiver 206 may be configured to transmit/receive user data, control information, radio signals/channels, etc. described in the descriptions, functions, procedures, proposals, methods and/or operational flowcharts disclosed herein through at least one antenna 208. In the present disclosure, at least one antenna may be a plurality of physical antennas or a plurality of logical antennas (e.g., antenna ports). At least one transceiver 206 may convert the received radio signals/channels, etc. from RF band signals to baseband signals, in order to process the received user data, control information, radio signals/channels, etc. using at least one processor 202. At least one transceiver 206 may convert the user data, control information, radio signals/channels processed using at least one processor 202 from baseband signals into RF band signals. To this end, at least one transceiver 206 may include (analog) oscillator and/or filters.

Referring to FIG. 2, components of a wireless device described may be referred to by different terms in terms of functionality. For example, the processor 202 may be referred to as a controller, the transceiver 206 may be referred to as a communication unit, and the memory 204 may be referred to as a storage unit. In some cases, the communication unit may be used to mean including at least a part of the processor 202 and the transceiver 206.

Referring to FIG. 2, a structure of a wireless device described may be understood as at least a part of the structure of various devices. For example, the structure of the wireless device shown in FIG. 2 may be at least a part of the various devices described with reference to FIG. 1 (e.g., a robot 100a, vehicles 100b-1, 100b-2, an XR device 100c, a hand-held device 100d, a home appliance 100e, an IoT device 100f, an AI device/server 100g). Furthermore, based on various embodiments, in addition to the components shown in FIG. 2, the device may further include other components.

For example, the device may be a hand-held device such as a smartphone, a smart pad, a wearable device (e.g., a smart watch, smart glasses), or a hand-held computer (e.g., a laptop, etc.). In this case, the device may further include at least one of an input/output unit for inputting and outputting video information/signals, audio information/signals, data, and/or information input by a user, a power supply unit that supplies power and includes a wired/wireless charging circuit, a battery, etc., an interface unit including at least one port (e.g., an audio input/output port, a video input/output port) for connection with another device.

For example, the device may be a mobile device such as a mobile robot, a vehicle, a train, a manned/unmanned aerial vehicle (AV), a ship, etc. In this case, the device may further include at least one of a position measurement unit that acquires location information of the mobile device through a GPS (global positioning system), various sensors, a driving unit including at least one of an engine, a motor, a power train, wheels, brakes, a steering device of the device, a power supply unit that supplies power and includes a wired/wireless charging circuit, a battery, etc., a sensor unit that senses state information, environmental information, user information of or around the device, an autonomous driving unit that performs functions such as path maintenance, velocity control, destination setting, etc.

For example, the device may be an XR device such as an HMD, a head-up display (HUD) provided in a vehicle, a television, a smartphone, a computer, a wearable device, a home appliance, a digital signage, a vehicle, a robot, etc. In this case, the device may further include at least one of a sensor unit that senses state information, environmental information, user information of or around the device, a power supply unit that supplies power and includes a wired/wireless charging circuit, a battery, etc., an input/output unit that acquires control information, data, etc., from outside and outputs generated XR objects.

For example, the device may be a robot that may be classified into industrial, medical, household, military, etc., use depending on the purpose or field of use. In this case, the device may further include at least one of a driving unit that performs various physical operations such as moving robot joints, a sensor unit that senses state information, environmental information, user information of or around the device.

For example, the device may be an AI device such as a TV, a projector, a smartphone, a PC, a laptop, a digital broadcast terminal, a tablet PC, a wearable device, a set-top box (STB), a radio, a washing machine, a refrigerator, a digital signage, a robot, or a vehicle, or the like. In this case, the device may further include at least one of a training unit that trains a model configured with an artificial neural network by using training data, an input unit that acquires various types of data from outside, an output unit that generates outputs related to vision, hearing, touch, and the like, a sensor unit that senses state information, environmental information, or user information of or around the device.

The structure of the wireless device shown in FIG. 2 may be understood as a part of a RAN node (e.g., a base station, a DU, an RU, an RRH, etc.). That is, the device shown in FIG. 2 may be a RAN node. In this case, the device may further include a wired transceiver for front haul and/or back haul communication. However, if the front haul and/or back haul communication is based on wireless communication, at least one transceiver 206 shown in FIG. 2 may be used for the front haul and/or back haul communication, and a wired transceiver may not be included.

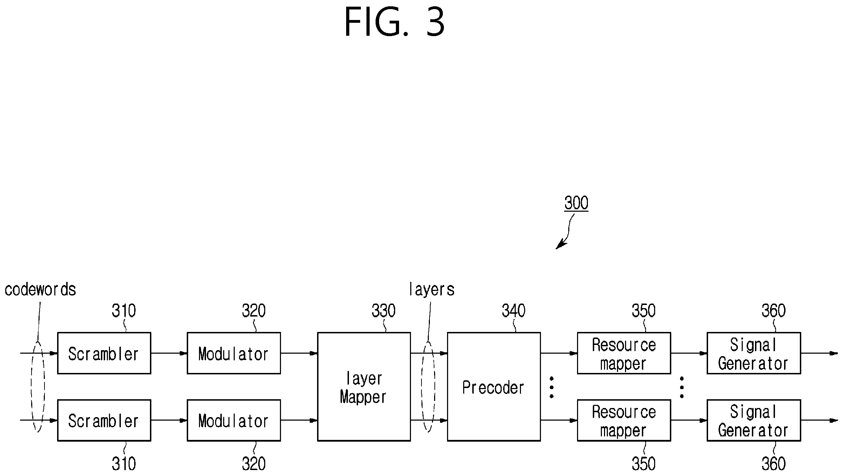

FIG. 3 shows a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, a signal generator 360. At this time, for example, the operations/functions of FIG. 3 may be performed by the processor 202 and/or the transceiver 206 of FIG. 2. In addition, for example, the hardware element of FIG. 3 may be implemented in the processor 202 and/or the transceiver 206 of FIG. 2. For example, blocks 310 to 360 may be implemented in the processor 202 of FIG. 2. In addition, blocks 310 to 350 may be implemented in the processor 202 of FIG. 2, and block 360 may be implemented in the transceiver 206 of FIG. 2, without being limited to the above-described embodiments.

A codeword may be converted into a radio signal through the signal processing circuit 300 of FIG. 3. Here, the codeword is a coded bit sequence of an information block. The information block may include a transport block (e.g., a UL-SCH transport block, a DL-SCH transport block). The radio signal may be transmitted through various physical channels (e.g., a PUSCH, a PDSCH). Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to at least one transport layer by the layer mapper 330. Modulation symbols of each transport layer may be mapped to corresponding antenna port(s) by the precoder 340. The output z of the precoder 340 may be obtained by multiplying the output y of the layer mapper 330 by a precoding matrix W of N×M. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol, a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module and a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200 of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

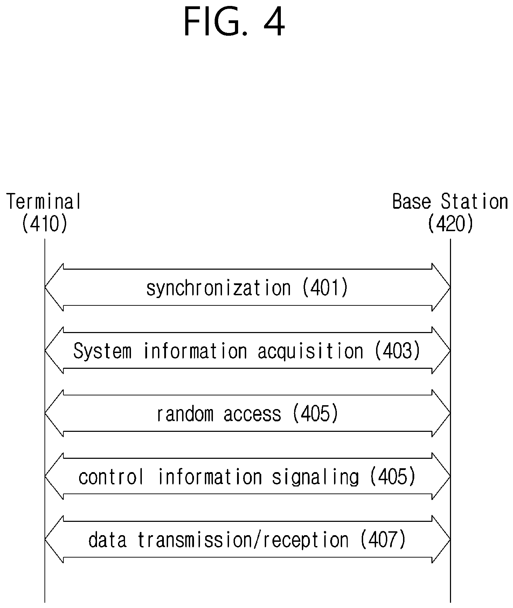

FIG. 4 shows a communication procedure between a terminal and a base station applicable to the present disclosure. FIG. 4 shows operations in which a terminal 410 and a base station 420 transmit and/or receive data, and operations performed prior thereto.

Referring to FIG. 4, in step 401, a terminal 410 and a base station 420 perform synchronization. For example, the terminal 410 performs an initial cell search operation. Specifically, the terminal 410 may detect at least one synchronization signal transmitted from the base station 420 based on a predefined rule. Here, the synchronization signal may include a plurality of synchronization signals classified based on structure or usage (e.g., a primary synchronization signal, a secondary synchronization signal). Through this, the terminal 410 may identify boundaries of a frame, a subframe, a slot, and/or a symbol of the base station 420, and may acquire information about the base station 420 (e.g., a cell identifier).

In step 403, the terminal 410 acquires system information transmitted from the base station 420. The system information is information related to attributes, characteristics, and/or capabilities of the base station 420 necessary to access the base station 420 and use a service, and may be classified based on content (e.g., whether it is essential for access), transmission structure (e.g., which channel is used, whether it is provided on-demand). For example, the system information may be classified into a master information block (MIB) and a system information block (SIB). If necessary, the terminal 410 may transmit a signal requesting the system information before receiving the system information. However, the requesting and providing of the system information may be performed after random access procedure described later.

In step 405, the terminal 410 and the base station 420 perform random access procedure. The terminal 410 may transmit and/or receive at least one message (e.g., random access preamble, random access response (RAR) message, etc.) for random access procedure based on information related to random access channel of the base station 420 (e.g., channel location, channel structure, structure of supported preambles, etc.) acquired through system information. For example, the terminal 410 may transmit a preamble (e.g., MSG1) through random access channel, receive an RAR message (e.g., MSG2), transmit to the base station 420 a message (e.g., MSG3) including information related to the terminal 410 (e.g., identification information) by using scheduling information included in the RAR message, and receive a message (e.g., MSG4) for contention resolution and/or connection establishment. In another example, MSG1 and MSG3 may be transmitted and received as a single message, or MSG2 and MSG4 may be transmitted and received as a single message.

In step 407, the terminal 410 and the base station 420 perform signaling of control information. Here, the control information may be defined in various layers such as a layer controlling connections (e.g., a radio resource control (RRC) layer), a layer handling mapping between logical channels and transport channels (e.g., a media access control (MAC) layer), a layer that handles physical channels (e.g., a physical (PHY) layer). For example, the terminal 410 and the base station 420 may perform at least one of signaling for establishing a connection, signaling for determining settings related to communication, signaling for indicating allocated resources.

In step 409, the terminal 410 and the base station 420 transmit and/or receive data. In other words, the terminal 410 and the base station 420 process and transmit and/or receive data based on signaling of control information. For example, when transmitting data, the terminal 410 or the base station 420 may perform at least one of channel encoding, rate matching, scrambling, constellation mapping, layer mapping, waveform modulation, antenna mapping, resource mapping on information bits. Conversely, when receiving data, the terminal 410 or the base station 420 may perform at least one of signal extraction from resources, waveform demodulation per antenna, signal placement considering layer mapping, constellation demapping, descrambling, channel decoding.

6G Communication System and core enabling technologies of the 6G system

A 5G system defines various operating bands within frequency range 1 (FR1) including 410 MHz to 7125 MHz and frequency range 2 (FR2) including 24,250 MHz to 71,000 MHz. For subsequent 6G system operating bands, various frequencies are being discussed, and the use of higher frequencies than those of the 5G system is being considered for wider bandwidth and higher transmission rates. As one example, the use of the Terahertz (THz) frequency band including approximately 100 GHz to 10 THz is being discussed. The THz frequency band has both the permeability of radio waves and the straightness of light waves, and communication using the THz frequency band is also expected to serve as a transitional role from communication centered on radio waves to communication based on light waves.

In this way, a 6G system utilizing the THz frequency has purposes such as i) very high data rate per device, ii) a very large number of connected devices, iii) global connectivity, iv) very low latency, v) decrease in energy consumption of battery-free IoT devices, vi) ultra-reliable connectivity, vii) connected intelligence with machine learning capacity, etc. The vision of the 6G system may include four aspects such as "intelligent connectivity", "deep connectivity", "holographic connectivity", "ubiquitous connectivity", and the 6G system may be designed to satisfy the requirements shown in [Table 1] below.

**[Table 1]**

| | |
|---|---|
| Per device peak data rate | 1 Tbps |
| E2E latency | 1 ms |
| Maximum spectral efficiency | 100 bps/Hz |
| Mobility support | Up to 1000 km/hr |
| Satellite integration | Fully |
| AI | Fully |
| Autonomous vehicle | Fully |
| XR | Fully |
| Haptic Communication | Fully |

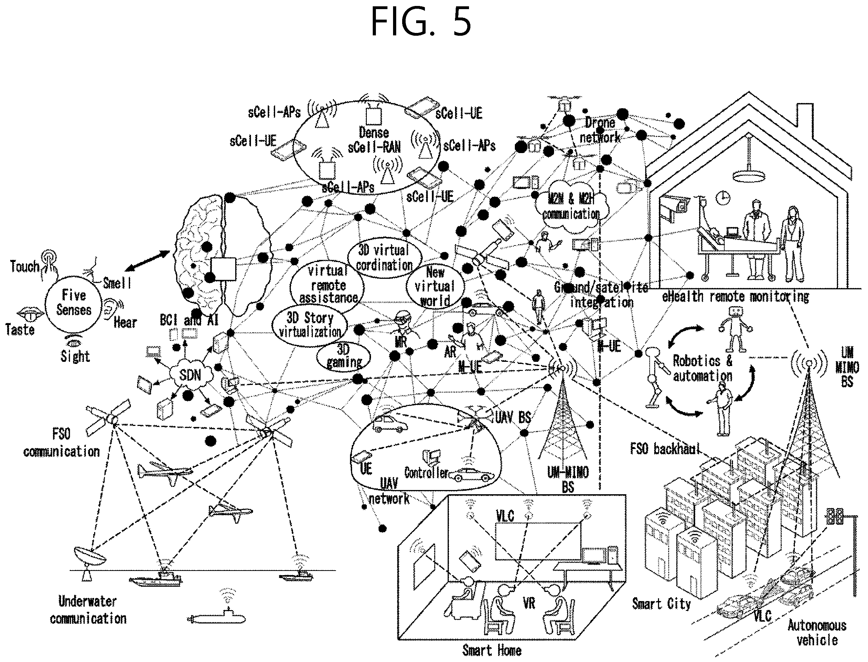

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security. FIG. 5 shows an example of a communication structure providable in a 6G system applicable to the present disclosure. Referring to FIG. 5, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. As core enabling technologies of the 6G system, technologies such as artificial intelligence (AI), Terahertz (THz) communication, optical wireless technology, FSO backhaul networks, large-scale MIMO technology, blockchain, 3D networking, quantum communication, unmanned aerial vehicles, cell-free communication, wireless information and energy transfer (WIET), integration of sensing and communication, integration of access and backhaul networks, holographic beamforming, big data analytics, large intelligent surfaces (LIS), etc. may be adopted.

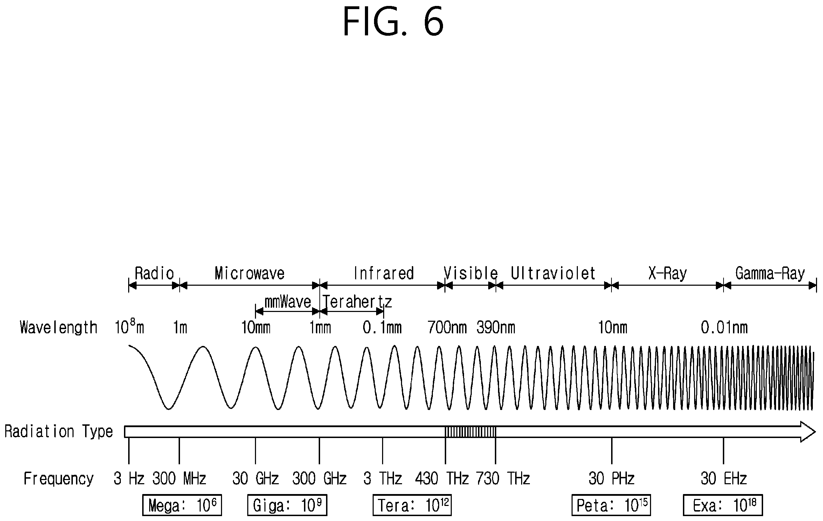

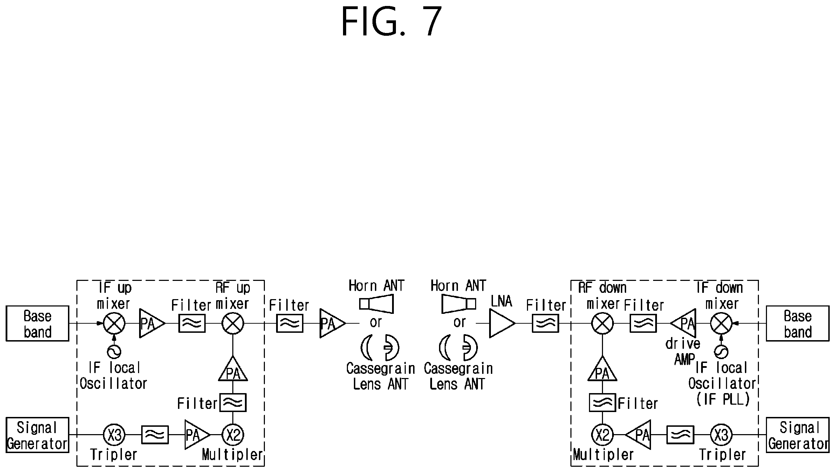

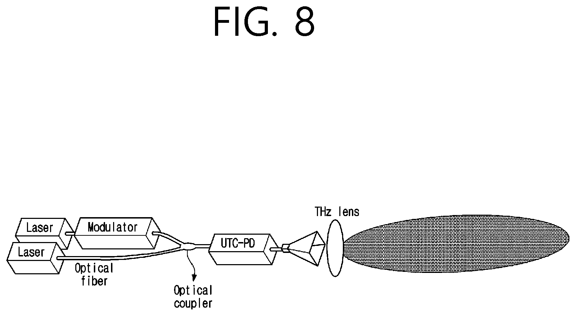

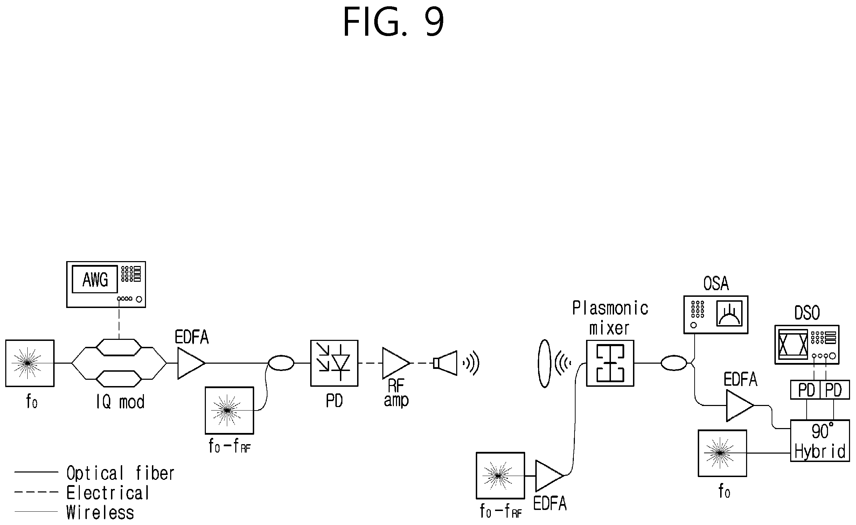

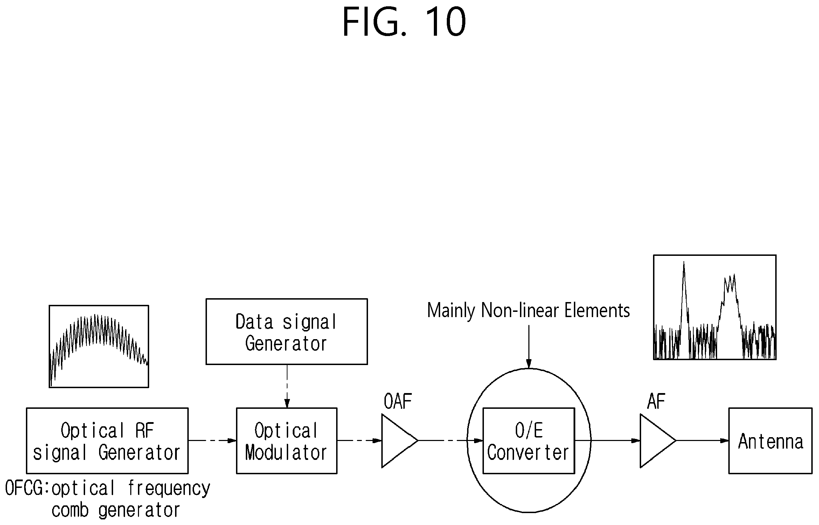

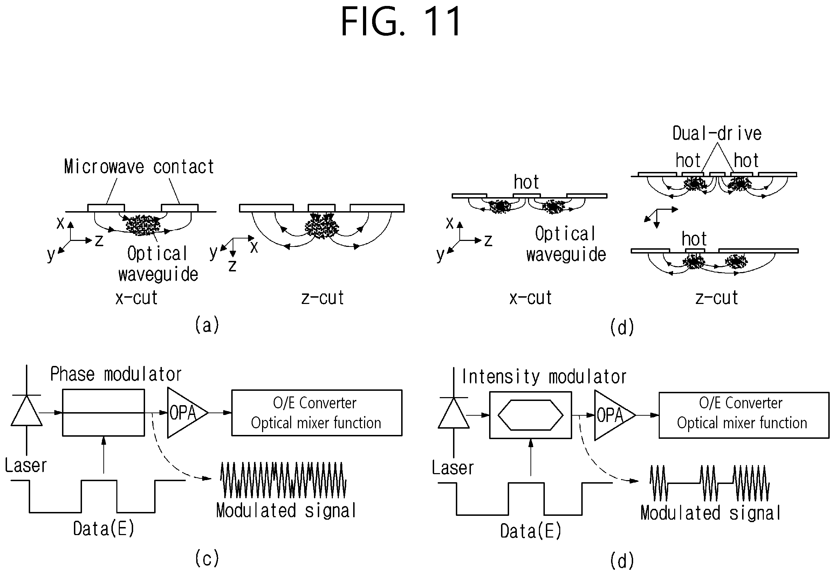

For example, THz communication may be implemented using circuit elements with a structure as shown in FIG. 7, as is a communication that utilizes a spectrum in a frequency band between 0.1 THz and 10 THz with a corresponding wavelength in the range of 0.03 mm to 3 mm as shown in FIG. 6. Additionally, optical wireless technology may be implemented based on a device with a structure as shown in FIG. 8, FIG. 9, FIG. 10, and FIG. 11, as is a technology that generates and modulates THz signals using optical elements.

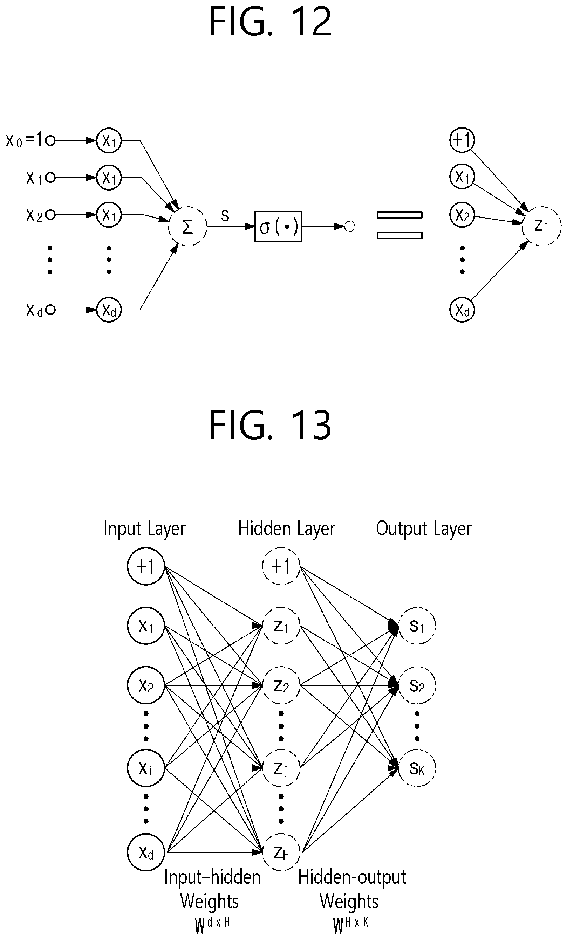

In addition, AI may be implemented based on various models, such as neural networks and machine learning models. For example, an AI model with a neural network structure may be based on the structure of a perceptron as shown in FIG. 12. Referring to FIG. 12, an artificial neural network may be composed of multiple perceptrons. Based on the structure of the perceptron, if an input vector x={x1, x2, ... , xd} is input, weights {W1, W2, ... , Wd} are multiplied by respective components, the results are summed, and then an activation function σ(·) is applied. In the case of a large-scale artificial neural network structure, If the simplified perceptron structure shown in FIG. 12 is extended, input vectors may be applied to perceptron of different dimensions. If perceptrons are stacked, a neural network having an input layer, a hidden layer, and an output layer as shown in FIG. 13 may be configured.

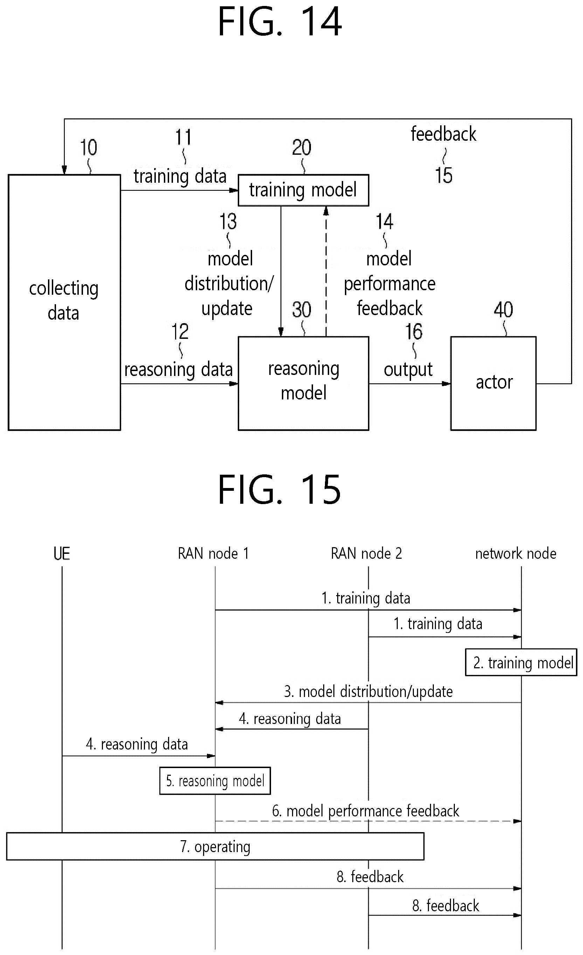

AI technology utilizing the structure of a neural network as described above may be operated based on a functional framework such as that shown in FIG. 14. FIG. 14 shows an example of a functional framework for the application of AI technology applicable to the present disclosure. First, a data collection block 1410 generates training data 1411 and/or inference data 1411 including processed input data by performing data preparation on input data collected from objects (e.g., UE, RAN node, network node, etc.). A model training block 1420 performs training on an AI model using the training data 1411 and provides information about the trained model to a model inference block 1430. A model inference block 1430 generates an output 1416 by performing inference and/or prediction using the inference data 1411. Additionally, the model inference block 1430 may provide model performance feedback 1414 to the model training block 1420. Here, the output 1416 refers to the inference output of the AI model generated by the model inference block 1430, and the details of the inference output may vary based on the use case. The actor block 1440 triggers or performs a specified task/action based on the output 1416. The actor block 1440 may trigger a task/action for another object (e.g., at least one UE, at least one RAN node, at least one network node, etc.) or for itself. Any one of the functions exemplified in FIG. 14 described above may be performed by two or more entities among the RAN, network node, network operator's OAM, or UE in collaboration. This may be referred to as a split AI operation.

FIG. 15 shows an example of a procedure for utilizing an AI model applicable to the present disclosure. FIG. 15 shows a case where a model training function (e.g., the function of the model training block 1420) is included in a network node, and a model inference function (e.g., the function of the model inference block 1430) is included in a RAN node. Referring to FIG. 15, in step 1, RAN node 1 and RAN node 2 transmit input data (e.g., training data) for training an AI model to a network node. Here, RAN node 1 and RAN node 2 may also transmit data collected from a UE (e.g., velocity, UE location, UE measurements related to RSRP, RSRQ, SINR of a serving cell and neighboring cells, etc.) to the network node. In step 2, the network node trains the AI model using the received training data. In step 3, the network node distributes/updates the AI model to RAN node 1 and/or RAN node 2. RAN Node 1 and/or RAN Node 2 may continue to perform model training based on the received AI model. In this procedure, it is assumed that the AI model is distributed/updated only to RAN Node 1. In Step 4, RAN Node 1 receives input data (e.g., inference data) for AI model inference from the UE and RAN Node 2. In Step 5, RAN Node 1 generates output data (e.g., prediction or decision) by performing inference based on an AI model using the received inference data. In Step 6, if applicable, RAN Node 1 may transmit model performance feedback to network nodes. In Step 7, RAN Node 1, RAN Node 2, and the UE (or 'RAN Node 1 and UE', or 'RAN Node 1 and RAN Node 2') perform an action based on the output data. For example, in the case of a load balancing action, the UE may move from RAN Node 1 to RAN Node 2. In step 8, RAN node 1 and RAN node 2 send feedback information to the network node.

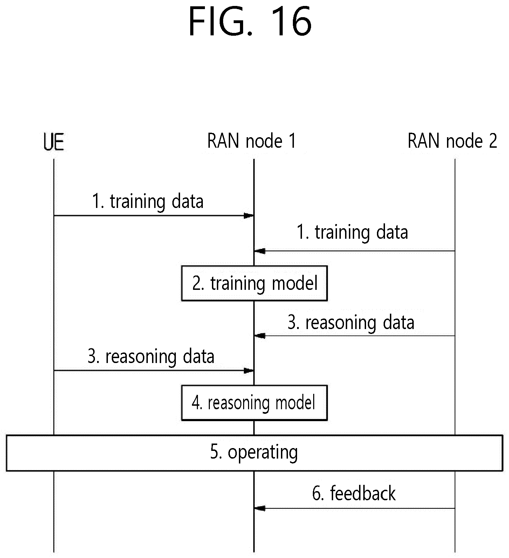

FIG. 16 shows another example of a procedure for utilizing an AI model applicable to the present disclosure. FIG. 16 shows a case where a model training function (e.g., the function of the model training block 1420) and a model inference function (e.g., the function of the model inference block 1430) are included in a RAN node. Referring to FIG. 16, in step 1, the UE and RAN node 2 transmit input data (e.g., training data) for training an AI model to RAN node 1. In step 2, RAN node 1 trains the AI model using the received training data. In step 3, RAN node 1 receives input data (e.g., inference data) for inference based on an AI model from the UE and RAN node 2. In step 4, RAN node 1 generates output data (e.g., prediction or decision) by performing inference based on an AI model using the received inference data. In step 5, RAN Node 1, RAN Node 2, and UE (or 'RAN Node 1 and UE', or 'RAN Node 1 and RAN Node 2') perform actions based on the output data. For example, in the case of a load balancing action, a UE may move from RAN Node 1 to RAN Node 2. In step 6, RAN Node 2 transmits feedback information to RAN Node 1.

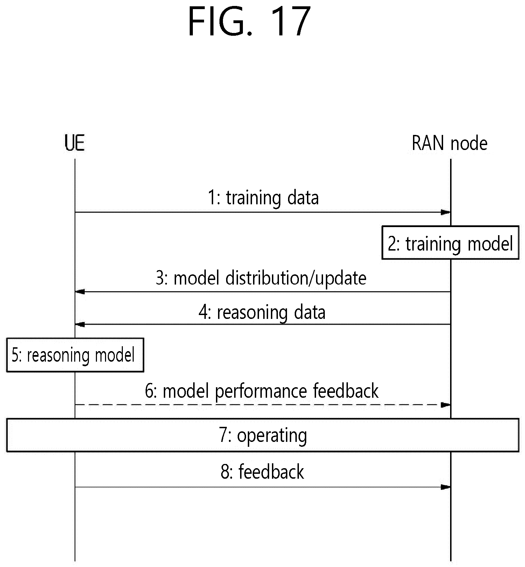

FIG. 17 shows another example of a procedure for utilizing an AI model applicable to the present disclosure. FIG. 17 shows a case where a model training function (e.g., the function of the model training block 1420) is included in a RAN node, and a model inference function (e.g., the function of the model inference block 1430) is included in a UE. Referring to FIG. 17, in step 1, the UE transmits input data (e.g., training data) for training an AI model to a RAN node. Here, the RAN node may collect data from various UEs and/or other RAN nodes. In step 2, the RAN node trains the AI model using the received training data. In step 3, the RAN node distributes/updates the AI model to the UE. The UE may continue to perform model training based on the received AI model. In step 4, input data (e.g., inference data) for inference based on an AI model is received from the UE, the RAN node, and/or other UEs. In Step 5, the UE generates output data (e.g., prediction or decision) by performing inference based on an AI model using the received inference data. In Step 6, if applicable, the UE may transmit model performance feedback to the RAN node. In Step 7, the UE and the RAN node perform actions based on the output data. In Step 8, the UE transmits feedback information to the RAN node.

Based on the aforementioned framework and procedure, an AI model may be trained and utilized in a wireless communication system. In the aforementioned framework and procedure, various data such as input data, training data, and inference data have been introduced, and the specific details of the aforementioned data may vary based on the task in which the AI model is utilized. For example, information used in the various embodiments of the present disclosure described below may be included in the aforementioned data.

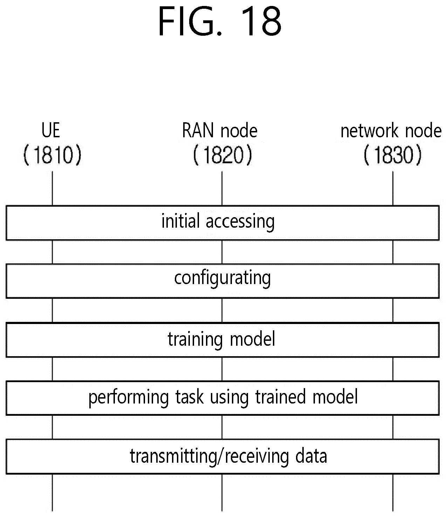

FIG. 18 shows a communication procedure based on an AI technology applicable to the present disclosure. The detailed procedures shown in FIG. 18 may be combined with various embodiments of the present disclosure described below. For example, data generated based on various embodiments of the present disclosure may be used for operations (e.g., setup, training, inference, and/or data transmission/reception) in at least one of the detailed procedures shown in FIG. 18. As another example, the result of the inference shown in FIG. 18 may be used to transmit and/or receive data based on various embodiments of the present disclosure.

Referring to FIG. 18, in step 1801, at least one of the UE 1810, RAN node 1820, or network node 1830 performs an initial access procedure. For example, in this step, at least one of an initial cell search operation, a system information obtaining operation, a random access operation, and a registration operation may be performed. In step 1803, at least one of the UE 1810, RAN node 1820, and network node 1830 performs a configuration procedure. Through the configuration procedure, parameters, resources, connections, and/or entities necessary to perform subsequent procedures at layers between the UE 1810 and the RAN node 1820 and/or at least one layer between the UE 1810 and the network node 1830 may be determined and/or generated. At this time, the configuration procedure may be performed based on information, state, and/or characteristics of the AI model used for subsequent training and inference.

In step 1805, at least one of the UE 1810, RAN node 1820, or network node 1830 performs a model training procedure. At least one of the UE 1810, RAN node 1820, and network node 1830 may collect training data and perform training using the training data. For example, the model training procedure may be performed as described with reference to FIG. 15, FIG. 16, or FIG. 17. If an offline trained model is used, this step may be omitted.

In step 1807, at least one of the UE 1810, RAN node 1820, or network node 1830 performs a task using a trained model. That is, the task may be performed by the result of inference and/or prediction using the trained model. For example, the task may be a preparatory operation for subsequent data transmission and/or reception, may be related to data transmission and/or reception, or may be related to data processing (e.g., encoding, decoding, etc.), as is a procedure belonging to a communication protocol.

In step 1809, at least one of the UE 1810, RAN node 1820, or network node 1830 transmits and/or receives data. At this time, the result of the task performed in step 1807 may be used. In some cases, the task performed in step 1807 may include the transmission and/or reception of data, in which case this step may be omitted as it is part of step 1807.

### Specific embodiments of the present disclosure

The present disclosure relates to a technique for adaptive channel information feedback in a wireless communication system. Specifically, the present disclosure proposes a technique for generating and transmitting CSI feedback that reflects temporal correlation while supporting a variable transmission rate (variable rate) in a CSI feedback framework based on a neural network.

In this disclosure, lower-case or upper-case italic letters represent scalars. Lower-case bold-face letters and upper-case bold-face letters represent vectors and matrices, respectively. Calligraphic letters represent sets. For example, *x*, **x**, **X** and 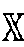 represent a scalar, a vector, a matrix, and a set, respectively. 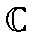 represents a set of complex numbers, and ${ℂ}^{m \times n}$ represents an m×n dimensional complex space.

In this disclosure, an artificial neural network that compresses and reconstructs CSI based on deep learning (DL) is referred to as a 'CSI network'. Recently, various advancements have been made in the architecture of CSI networks.

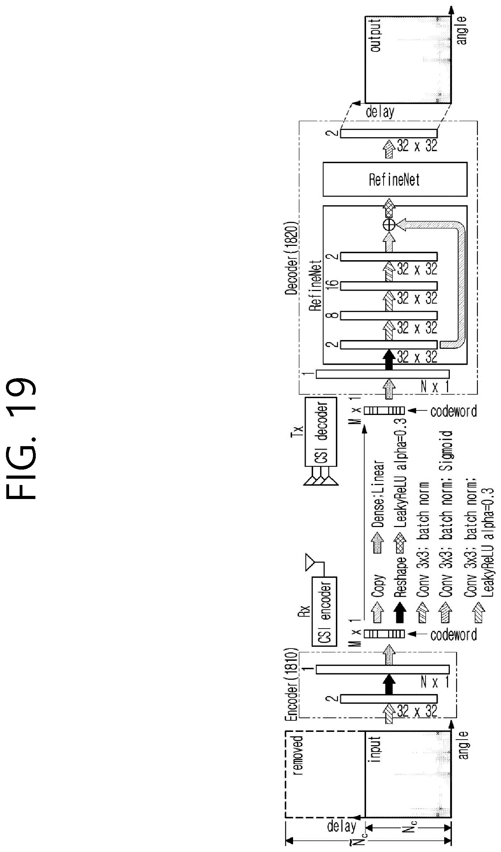

FIG. 19 shows an example neural network structure for CSI feedback. FIG. 19 shows CsiNet, which is an example of a CSI network structure. Referring to FIG. 19, the CSI network may be viewed as including a CSI encoder 1910 and a CSI decoder 1920. For example, in the downlink, where data transmission is performed from a base station to a UE, the base station may operate as a transmitter, and the UE may operate as a receiver. In the downlink, the CSI encoder may be operated by the UE, which is a receiver, and the CSI decoder may be operated by the base station, which is a transmitter. In the present disclosure, for convenience of explanation, the case of downlink communication is assumed, but the various embodiments described below are not limited to the downlink and may also be applied to other links, such as uplink, sidelink, etc.

A CSI encoder included in a UE may compress information about a channel state. The compressed information, which is the output of the CSI encoder, is transmitted to a base station via uplink feedback. The base station inputs the received compressed information into a CSI decoder, and the CSI decoder may reconstruct information about the channel state of the UE. In the present disclosure, for convenience of description, the compressed information, which is the output of the CSI encoder and the input of the CSI decoder, may be referred to as a CSI feedback signal, CSI feedback information, or other terms having equivalent technical meanings. In the present disclosure, the CSI feedback signal may have the form of a bit stream. Here, the bit stream means a sequence of binary digits or bits of 0 or 1, rather than a vector of floating point numbers.

The temporal correlation of a time-varying wireless channel is a first-order Markov process, which may be modeled as shown in [Equation 1] below. [Equation 1] ${H}_{t} = {αH}_{t - 1} + \sqrt{1 - {α}^{2}} {G}_{t}$

In [Equation 1], **H***ₜ* represents a channel instance representing channel information at time *t*, *α* represents a coefficient between 0 and 1 representing the temporal correlation between two consecutive channels, and **G***ₜ* represents a term representing randomness. For example, **G***ₜ* may be a zero-mean and unit-variance complex Gaussian matrix. As an example of **H***ₜ,* a channel matrix in the spatial-frequency domain may be considered. The CSI matrix in the spatial-frequency domain may be represented as follows.

In this disclosure, it is assumed that the number of transmitting antennas of the base station is *Nₜ*, and the number of receiving antennas of the UE is 1. However, the various embodiments described below are not limited to a single receiving antenna, and may be extended to a multi-antenna case as well. In addition, in the following description, an OFDM system using *N_{c}*, orthogonal subcarriers is considered.

The signal received by the UE through the *n*th subcarrier may be represented as shown in [Equation 2] below. [Equation 2] ${y}_{n} = {h}_{n}^{H} {v}_{n} {x}_{n} + {z}_{n} , \left(n=1,2,…,{N}_{c}\right)$

In [Equation 2], ${h}_{n} ∈ {ℂ}^{{N}_{t} \times 1}$ represents an instantaneous channel vector in the frequency domain, ${v}_{n} ∈ {ℂ}^{{N}_{t} \times 1}$ represents a precoding vector, ${x}_{n} ∈ ℂ$ represents a data symbol transmitted in downlink, ${z}_{n} ∈ ℂ$ represents additive white Gaussian noise (AWGN), *n* represents a subcarrier index, and *N_{c}* represents the number of subcarriers.

The channel vector **h***ₙ* for the *n*th subcarrier may be estimated by the UE and fed back to the base station. Considering all subcarriers, the CSI matrix, which may be represented by $H = {\left[{h}_{n}, …, {h}_{{N}_{c}}\right]}^{H} ∈ {ℂ}^{{N}_{c} \times {N}_{t}}$, must be properly fed back from the UE to the base station so that the base station may correctly determine the precoding vectors. Here, $H = {\left[{h}_{n}, …, {h}_{{N}_{c}}\right]}^{H} ∈ {ℂ}^{{N}_{c} \times {N}_{t}}$ may be understood as the CSI matrix in the spatial-frequency domain.

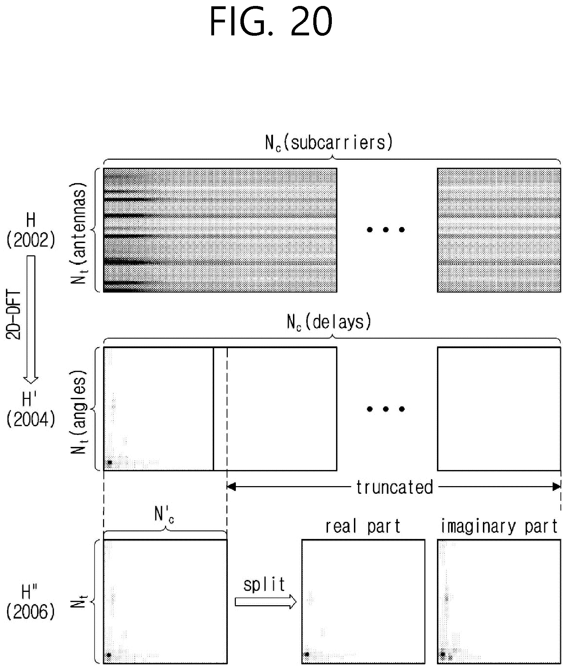

As an example of **H***ₜ*, a channel matrix in the angular-delay domain may be used instead of a channel matrix in the spatial-frequency domain. The CSI matrix **H** in the spatial-frequency domain may be processed as shown in FIG. 20. FIG. 20 shows an example of a CSI matrix processing process in a neural network for channel state information feedback. FIG. 20 reverses the vertical and horizontal directions compared to the general way a matrix is represented. Referring to FIG. 20, preprocessing may be performed in which a two-dimensional (2D) discrete Fourier transform (DFT) and truncation along the delay axis in the angular-delay domain, and split into real part and imaginary part are sequentially performed. Through this, a channel matrix in the angular-delay domain may be obtained.

That is, in order to utilize the CSI network, preprocessing including the following three steps may be performed, as shown in FIG. 20.

### (1) 2D-DFT

The CSI matrix **H**' in the angular-delay domain may be obtained from the CSI matrix **H** in the spatial-frequency domain. The relational expression is equal to **H** = F*_{d}*HF*ₐ.* Here, ${F}_{d} ∈ {ℂ}^{{N}_{c} \times {N}_{c}}$ and ${F}_{a} ∈ {ℂ}^{{N}_{t} \times {N}_{t}}$ are two types of DFT matrices.

### (2) truncation with respect to delay-axis

Since the time delay between multipath arrivals lies within a limited period, the time delays for all subcarriers fall within a specific period. Therefore, the CSI matrix **H**' in the angular-delay domain has large values only in the first ***N***'*_{c}* rows, and values close to zero in the remaining portion. Therefore, by taking only the first *N*'*_{c}* rows of the CSI matrix **H**' in the angular-delay domain, $H " ∈ {ℂ}^{{N}_{c}^{′} \times {N}_{t}}$ is obtained.

### (3) split into real part and imaginary part

The truncated CSI matrix $H " ∈ {ℂ}^{{N}_{c}^{′} \times {N}_{t}}$ includes a complex number for each element of the matrix, but general neural networks have difficulty handling complex numbers. Therefore, for the convenience of processing in neural networks, two matrices are created by dividing the real and imaginary parts of each element, and a tensor with a size of $2 \times {N}_{c}^{′} \times {N}_{t}$ may be constructed by stacking the two matrices in the third dimension.

The above-described preprocessing process and the types of channel instances shown are only examples, and various embodiments of the present disclosure are not limited thereto. In the description of the above-described preprocessing process and in FIG. 20, the channel matrix is represented as **H**, **H**', **H**'', etc. based on which preprocessing process was performed or in which domain it is represented. However, in the following description, a channel instance representing channel information at time *t* may be represented as **H**ₜ regardless of the domain and whether preprocessing was performed.

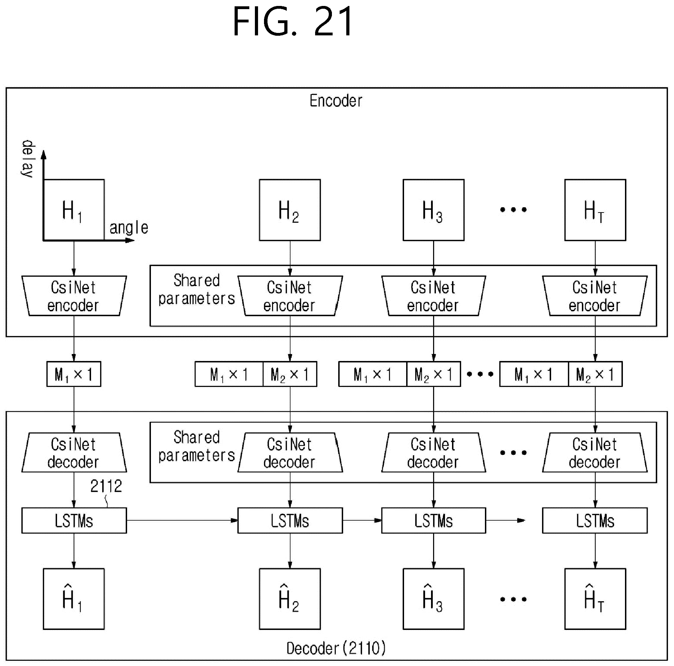

FIG. 21 shows another example of a neural network structure for channel state information feedback. FIG. 21 shows the structure of CsiNet-long short term memory (LSTM). The neural network shown in FIG. 21 introduces an LSTM structure on the decoder side 2110. LSTM is a type of recurrent neural network (RNN) that may be included in the decoder structure for more effective CSI reconstruction by utilizing the temporal correlation of the wireless channel. The role of the LSTM module 2112 is to utilize information extracted from the CSI of the previous time for the reconstruction of the CSI of the current time. By utilizing LSTM not only on the decoder side but also on the encoder side, it is possible to utilize the temporal correlation of the channel for compressing time-varying channels. In other words, the temporal correlation of the time-varying channel may be utilized for CSI compression and reconstruction.

Considering temporal correlation, time-varying channels may be treated like sequence data. For example, sequence data may be likened to video. However, conventional CSI network structures that consider temporal correlation are not fully studied or optimized from a rate-distortion performance perspective. Rather, they are simply trained by defining the mean square error (MSE) as a loss function from a distortion perspective. In the case of the conventional CSI network structures in which temporal correlation is considered, that is, there is a problem that a code rate or a code length is fixed.

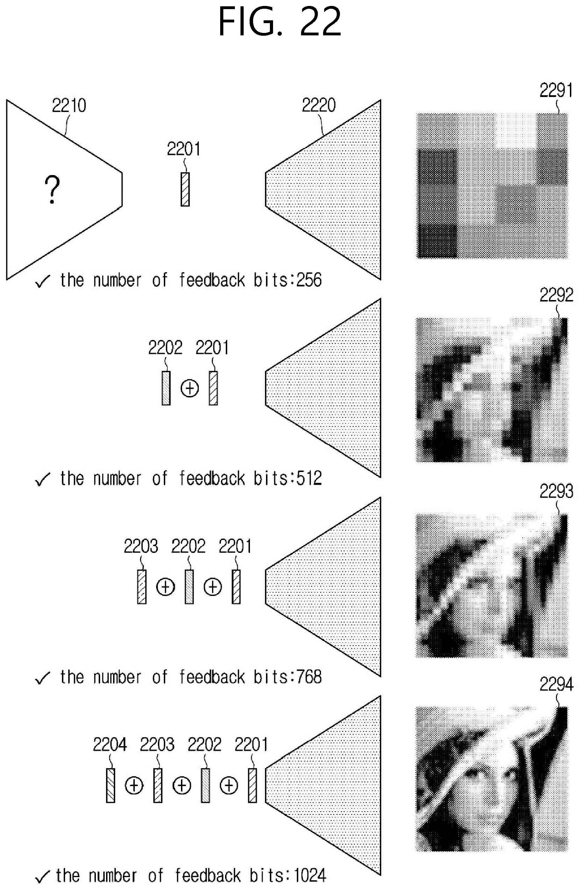

Meanwhile, to address the problem that most existing CSI feedback techniques based on deep learning have fixed code lengths and support a variable feedback transmission rate (feedback rate), a framework utilizing an accumulable CSI feedback signal, as shown in FIG. 22, may be applied. FIG. 22 shows the concept of CSI feedback supporting a variable feedback transmission rate.

Referring to FIG. 22, different CSI feedback bit streams may be combined before being input to the decoder neural network 2220 of the CSI network. Accordingly, the input dimension of the decoder neural network 2220 may be maintained, the structure of the decoder neural network 2220 may be maintained as is, and further, the model parameter set of the decoder neural network 2220 may also be maintained as is.

Regardless of the number of CSI feedback bit streams that are combined before being input to the decoder neural network 2220, the same decoder neural network 2220 model may always be used. The number of feedback bits increases in proportion to the number of CSI feedback bit streams that are added and input to the decoder neural network 2220. For example, if the length of the CSI feedback bit stream that may be input to the decoder neural network 2220 alone is 256 bits, the number of feedback bits will increase to 512, 768, and 1024 as the number of CSI feedback bit streams becomes 2, 3, and 4, respectively.

Meanwhile, even if the same decoder neural network 2220 model is used, the CSI reconstruction performance may improve as the number of CSI feedback bit-streams input to the decoder neural network 2220 increases. FIG. 21 metaphorically represents the improvement in CSI reconstruction performance as the number of CSI feedback bit-streams increases through the change in resolution of the reconstructed Lenna image. Specifically, the second image 2292 reconstructed based on two CSI feedback bit-streams 2201, 2202 has a higher resolution than the first image 2291 reconstructed based on one CSI feedback bitstream 2201. Similarly, it is confirmed that the resolution gradually increases in the order of the third image 2293 reconstructed based on three CSI feedback bit-streams 2201 to 2203 and the fourth image 2294 reconstructed based on four CSI feedback bit-streams 2201 to 2204.

However, in FIG. 22, what is represented as an image of Lena is purely a metaphor, and information such as the CSI matrix, etc., that may actually be reconstructed from the CSI network is not recognized by the human eye like an image. Representing the increase in CSI reconstruction performance as an increase in image resolution is also merely a metaphor, and should not be understood as meaning that the CSI reconstruction performance improves in terms of image resolution. This is because, due to characteristics of deep learning, it may be difficult to accurately explain what meaning different CSI feedback bit streams input by being added to a decoder neural network 2220 have and what role they play as signals.

In FIG. 22, a plurality of CSI feedback bit streams 2201 to 2204 having different roles are combined before being input to the decoder neural network 2220. The first CSI feedback bit stream 2201 may be a signal capable of CSI reconstruction even when input to the decoder neural network 2220 alone. The second CSI feedback bit stream 2202 may be a signal capable of CSI reconstruction only when input to the decoder neural network 2220 together with the first CSI feedback bit stream 2201. In this way, the CSI feedback bit streams generated by the encoder neural network 2210 may be classified into a CSI feedback bit stream that enables CSI restoration even when input to the decoder neural network 2220 alone and a CSI feedback bit stream that enables CSI reconstruction only when combined. At this time, the former CSI feedback bit stream may be referred to as an 'independent CSI bit stream', and the latter CSI feedback bit stream may be referred to as a 'dependent CSI bit stream'.

In the representations intended to combine bit streams included in a CSI feedback signal, such as "added before being input to a decoder neural network", "added and input to a decoder neural network", or "added to a decoder neural network and input", used in the present disclosure, the operation of "added" may be understood as not only summation, but also one of a weighted sum, a weighted average, or various numerical processing that may be derived therefrom.

As described above, if neural network structures and signaling procedures that may operate different feedback transmission rates through the same neural network model, different from the general CSI network, are applied, adaptive feedback transmission rate operation based on the downlink channel environment and uplink resource state becomes possible.

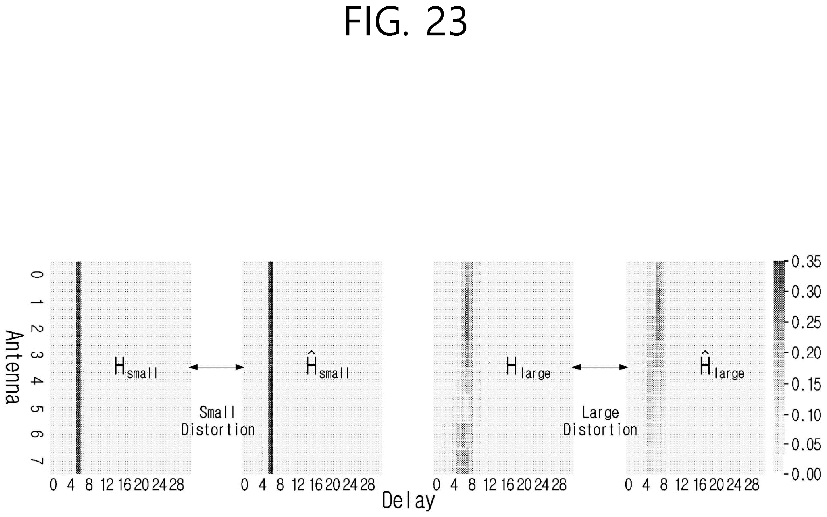

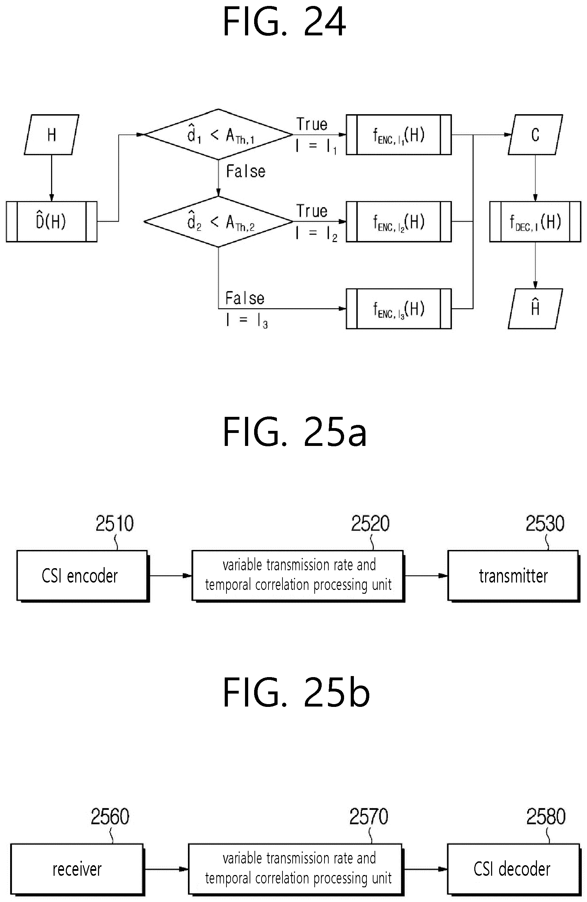

There are several studies to support a variable transmission rate (variable rate). FIG. 23 shows an example of distortion imbalance between channel state information matrix instances. Referring to FIG. 23, it may be seen that even when using the same number of CSI feedback bits, the distortion between the reconstructed CSI matrices and the original CSI matrices may vary based on the CSI pattern. Noting this distortion imbalance, a variable transmission rate CSI feedback framework, as shown in FIG. 24, has been proposed. FIG. 24 shows an example of a procedure for channel state information feedback supporting a variable transmission rate. Referring to FIG. 24, an estimator for predicting distortion is configured as a neural network, an appropriate codeword length is selected based on the distortion values predicted by the estimator, and the channel may be compressed/reconstructed using an encoder and decoder with the selected codeword length. However, the aforementioned techniques do not consider the temporal correlation of the channel.

The present disclosure proposes a CSI feedback framework that considers the temporal correlation of time-varying channels and supports variable feedback transmission rates from a rate-distortion performance perspective. In other words, the present disclosure describes various embodiments that support variable feedback transmission rates based on the temporal correlation of time-varying channels.

FIG. 25a shows an example of the structure of a transmitter based on an embodiment of the present disclosure. FIG. 25a shows the functional structure of the transmitter. The transmitter may perform functions such as those shown in FIG. 25a based on components such as those shown in FIG. 2.

Referring to FIG. 25a, the transmitter includes a CSI encoder 2510, a variable transmission rate and temporal correlation processing unit 2520, a transmitter 2530. The CSI encoder 2510 and the variable transmission rate and temporal correlation processing unit 2520 may be processors designed to implement the functions described below, or may be processors executing instructions or programs for the functions described below.

The CSI encoder 2510 encodes channel information. The CSI encoder 2510 may compress channel information generated based on a reference signal. Based on an embodiment, the CSI encoder 2510 may have a neural network structure including multiple layers. That is, the CSI encoder 2510 may generate a latent vector representing a channel instance using the encoder neural network.

The variable transmission rate and temporal correlation processing unit 2520 generates feedback information including channel information by converting encoded channel information into a bit stream. Specifically, the variable transmission rate and temporal correlation processing unit 2520 may estimate the temporal correlation of the channel and convert a latent vector representing a channel instance into a bit stream based on the temporal correlation. In addition, the variable transmission rate and temporal correlation processing unit 2520 may support a variable transmission rate by adaptively adjusting the size of the bit stream representing the channel information. To reflect the temporal correlation, the variable transmission rate and temporal correlation processing unit 2520 may estimate the Doppler characteristic of the channel based on channel instances determined at adjacent times and encode a latent vector representing the channel instance based on the Doppler characteristic. At this time, since the feedback information is generated based on the temporal correlation, the receiver requires information related to the temporal correlation to reconstruct the channel information. Accordingly, the feedback information may further include information related to the temporal correlation in addition to the channel information. Based on an embodiment, the variable transmission rate and temporal correlation processing unit 2520 may perform entropy encoding using an entropy model based on the Doppler characteristics of the channel.

The transmitter 2530 transmits feedback information. The transmitter 2530 may perform physical layer processing, such as modulation, resource mapping, etc., on the feedback information and then transmit it via a wireless channel. Here, the feedback information may include channel information and information related to the temporal correlation of the channel.

FIG. 25b shows an example of the structure of a receiver based on an embodiment of the present disclosure. FIG. 25b shows the functional structure of the receiver. The receiver may perform functions such as those shown in FIG. 25b based on components such as those shown in FIG. 2.

Referring to FIG. 25b, the receiver includes a receiver 2560, a variable transmission rate and temporal correlation processing unit 2570, a CSI decoder 2580. The variable transmission rate and temporal correlation processing unit 2570 and the CSI decoder 2580 may be processors designed to implement the functions described below, or may be processors executing instructions or programs for the functions described below.

The receiver 2560 receives feedback information. The transmitter 2560 may obtain feedback information by performing physical layer processing, such as resource demapping, demodulation, etc., on a signal received via a wireless channel. Here, the feedback information may include channel information and information related to the temporal correlation of the channel.

The variable transmission rate and temporal correlation processing unit 2570 may determine a latent vector representing a channel instance based on feedback information. Specifically, the variable transmission rate and temporal correlation processing unit 2570 may verify the temporal correlation of the channel based on the feedback information, and obtain a latent vector representing the channel instance from a bit stream representing channel information based on the temporal correlation. To consider the temporal correlation, the variable transmission rate and temporal correlation processing unit 2570 may verify a Doppler characteristic based on the feedback information, and decode the bit stream representing the channel information based on at least one of the Doppler characteristic and a previously reconstructed instance. Based on an embodiment, the variable transmission rate and temporal correlation processing unit 2570 may perform entropy decoding using an entropy model based on the Doppler characteristic of the channel.

The CSI decoder 2580 recovers channel information by decoding a latent vector representing a channel instance. In an embodiment, the CSI decoder 2580 may have a neural network structure including multiple layers.

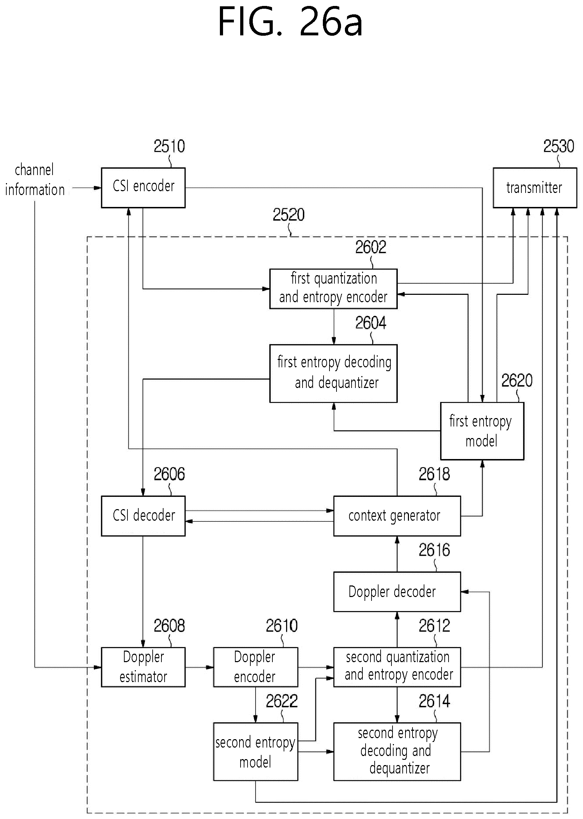

FIG. 26a shows an example of the structure of a transmitter using Doppler estimation and entropy coding based on an embodiment of the present disclosure. FIG. 26a is an example of the detailed structure of FIG. 25a.

Referring to FIG. 26a, the transmitter includes a CSI encoder 2510, a variable transmission rate and temporal correlation processing unit 2520, a transmitter 2530. Here, the variable transmission rate and temporal correlation processing unit 2520 includes a first quantization and entropy encoder 2602, a first entropy decoding and dequantizer 2604, a CSI decoder 2606, a Doppler estimator 2608, a Doppler encoder 2610, a second quantization and entropy encoder 2612, a second entropy decoding and dequantizer 2614, a Doppler decoder 2616, a context generator 2618, a first entropy model 2620, a second entropy model 2622.

Channel information is measured based on a reference signal and provided to a CSI encoder 2510 and a Doppler estimator 2608. The channel information may include channel instances represented in an image format in the angular-delay domain or the space-frequency domain. The channel information input to the CSI encoder 2510 is intended to be transmitted in the current feedback occasion, and the channel information input to the Doppler estimator 2608 is intended to determine the temporal correlation for the channel information to be transmitted in the current feedback occasion.

The first quantization and entropy encoder 2602 performs quantization and entropy encoding on a latent vector (hereinafter referred to as a "channel latent vector") representing a channel instance generated by the CSI encoder 2510. Accordingly, the first quantization and entropy encoder 2602 generates a bitstream corresponding to the channel instance.

The first entropy decoding and dequantizer 2604 performs entropy decoding and dequantization on the bitstream generated by the first quantization and entropy encoder 2602, thereby reconstructing the channel latent vector. The CSI decoder 2606 reconstructs channel information (e.g., channel instance) based on the channel latent vector. To generate information related to temporal correlation, channel instances from previous times may be used. Accordingly, the first entropy decoding and dequantizer 2604 and the CSI decoder 2606 reconstruct the channel information. Although not shown in FIG. 26a, a component that adds noise corresponding to channel noise may be further included between the first quantization and entropy encoder 2602 and the first entropy decoding and dequantizer 2604.

The Doppler estimator 2608 generates Doppler information by estimating the Doppler characteristics of the channel based on the current channel information and the previous channel information. Doppler characteristics are related to temporal correlation. The current channel information includes the channel instance to be fed back. The previous channel information, as a previously fed back channel instance, may be obtained from the CSI decoder 2606.

The Doppler encoder 2610 encodes Doppler information to generate a latent vector (hereinafter referred to as a "Doppler latent vector") representing the Doppler information. The second quantization and entropy encoder 2612 generates a bitstream representing temporal correlation by performing quantization and entropy coding on the Doppler latent vector. The bitstream representing the temporal correlation is provided to the transmitter 2530 to be included in the feedback information.

The second entropy decoding and dequantizer 2614 performs entropy decoding and dequantization on a bit stream representing temporal correlation, thereby reconstructing a Doppler latent vector. The Doppler decoder 2616 reconstructs Doppler information based on the Doppler latent vector. Although not shown in FIG. 26a, a component that adds noise corresponding to channel noise may be further included between the second quantization and entropy encoder 2612 and the second entropy decoding and dequantizer 2614.

The context generator 2618 generates context information for the first entropy model 2620 based on the Doppler information reconstructed by the Doppler decoder 2616. In addition, the context information generated by the context generator 2618 may be provided to the CSI encoder 2510 and the CSI decoder 2606. For example, the context information may include a channel instance predicted from a previous channel instance based on the Doppler information. The context information may be generated in at least one of various domains (e.g., angular-delay domain, feature domain, etc.). The context generator 2618 may have a neural network structure including a plurality of layers.

The first entropy model 2620 generates an entropy model for the entropy encoding operation of the first quantization and entropy encoder 2602 and the entropy decoding operation of the first entropy decoding and dequantizer 2604. The first entropy model 2620 generates at least one prior (e.g., a temporal prior, a hierarchical prior, etc.) based on context information and a channel latent vector, and generates statistical parameters (e.g., a mean, a standard deviation, etc.) for the generated at least one prior. In addition, the first entropy model 2620 may provide information determined in the process of generating at least one prior (e.g., a result of encoding and quantizing a hierarchical prior for a channel latent vector) to the transmitter 2530, thereby providing the information to the receiver. Through this, at least one prior required for entropy decoding may be determined in the receiver.

The second entropy model 2622 generates an entropy model for the entropy encoding operation of the second quantization and entropy encoder 2612 and the entropy decoding operation of the second entropy decoding and dequantizer 2614. The second entropy model 2622 generates at least one prior (e.g., a hierarchical prior, etc.) based on the Doppler latent vector, and generates statistical parameters (e.g., a mean, a standard deviation, etc.) for the generated at least one prior. In addition, the second entropy model 2622 may transmit information determined in the process of generating at least one prior (e.g., a result of encoding and quantizing the hierarchical prior for the Doppler latent vector) to the transmitter 2530 and thereby transmit the information to the receiver. Through this, at least one prior required for entropy decoding may be determined in the receiver.

FIG. 26b shows a more detailed example of the structure of a receiver utilizing Doppler estimation and entropy coding based on an embodiment of the present disclosure. FIG. 26b is an example of the detailed structure of FIG. 25b.

Referring to FIG. 26b, the receiver includes a receiver 2560, a variable transmission rate and temporal correlation processing unit 2570, and a CSI decoder 2580. Here, the variable transmission rate and temporal correlation processing unit 2570 includes a first entropy decoding and dequantizer 2662, a second entropy decoding and dequantizer 2664, a Doppler decoder 2666, a context generator 2668, a first entropy model 2670, a second entropy model 2672.

The receiver 2560 receives feedback information. Then, the receiver 2560 provides channel information included in the feedback information to a first entropy decoding and dequantizer 2662 and a first entropy model 2670, and provides information related to temporal correlation included in the feedback information to a second entropy decoding and dequantizer 2664 and a second entropy model 2672.

The first entropy decoding and dequantizer 2662 performs entropy decoding and dequantization on a bitstream representing channel information included in the feedback information, thereby restoring a channel latent vector. The channel latent vector is provided to the CSI decoder 2580 and used to reconstruct channel information (e.g., channel instance).

The second entropy decoding and dequantizer 2664 performs entropy decoding and dequantization on a bitstream representing temporal correlation, thereby reconstructing the Doppler latent vector. The Doppler decoder 2666 reconstructs Doppler information based on the Doppler latent vector.

The context generator 2668 generates context information for the first entropy model 2670 based on the Doppler information reconstructed by the Doppler decoder 2666. In addition, the context information generated by the context generator 2668 may be provided to the CSI decoder 2580. The context generator 2668 may have a neural network structure including multiple layers.

The first entropy model 2670 generates an entropy model for the entropy decoding operation of the first entropy decoding and dequantizer 2662. The first entropy model 2670 generates at least one prior (e.g., a temporal prior, a hierarchical prior, etc.) based on context information and a channel latent vector, and generates statistical parameters (e.g., a mean, a standard deviation, etc.) for the generated at least one prior. To this end, the first entropy model 2670 may perform entropy decoding and hierarchical prior decoding on information received from a transmitter.

The second entropy model 2672 generates an entropy model for the entropy decoding operation of the second entropy decoding and dequantizer 2664. The second entropy model 2672 generates at least one prior (e.g., a hierarchical prior, etc.) based on the Doppler latent vector, and generates statistical parameters (e.g., a mean, a standard deviation, etc.) for the generated at least one prior.

Based on the structure of the transmitter shown in FIG. 26a and the structure of the receiver shown in FIG. 26c, there are functional blocks that perform similar functions in the transmitter and the receiver. If the functional blocks that perform similar functions are represented as a single block, the transmitter and the receiver may be represented as in FIG. 26c. FIG. 26c shows an example of the conceptual structure of the transmitter and the receiver based on an embodiment of the present disclosure. All blocks shown in FIG. 26 may be understood as transmitters, and the portion enclosed in a dotted box may be understood as receivers.

Referring to FIG. 26c, the encoder includes a Doppler estimator. The Doppler information **D***ₜ*, which is the output of the Doppler estimator, is encoded into a Doppler latent vector **d***ₜ* through a Doppler encoder neural network. The Doppler latent vector **d***ₜ* may be converted into a bit stream through an entropy bottleneck layer. The quantized Doppler latent vector **d̂**ₜ, may be decoded into reconstructed Doppler information **D̂***ₜ* through a Doppler decoder neural network. The Doppler-related information and the Doppler latent vector represented in the present disclosure are intermediate information or signals obtained in a data-driven manner from the channel information of the current time and the channel information of the previous time, and it is not easy to clearly identify or accurately explain the physical meaning of the signal due to the characteristics of neural networks and deep learning. However, since the above-mentioned information or signals include information related to the Doppler shift, the present disclosure refers to them as Doppler-related information and the Doppler latent vector. However, in the present disclosure, the Doppler latent vector, which is a signal transmitted and/or received between a UE and a base station, may actually include information related to temporal correlation other than the Doppler shift. Unlike traditional Doppler estimators based on mathematical model-driven methods, the Doppler-related information, which is the output of a Doppler estimator that may be implemented as a data-driven neural network based on various embodiments of the present disclosure, may be extracted so that higher-dimensional, rich temporal correlation information that may be represented in the feature domain may be better reflected.

In the present disclosure, the Doppler estimator takes as input a previously decoded channel instance and a current measured channel instance, represented in the angular-delay domain, and outputs Doppler-related information extracted from the angular-delay domain or a specific feature domain. This differs from a Doppler estimator that typically takes as input a received signal and outputs the frequency shift itself. However, if a traditional Doppler estimator is utilized, and appropriate modifications are applied, the traditional Doppler estimator may also be used as the Doppler estimator based on an embodiment of the present disclosure. Afterwards, the context **ĉ***ₜ* is obtained from the reconstructed Doppler information **D̂***ₜ* and the previously decoded CSI matrix **Ĥ**_{*t*-1}. If the **ĉ***ₜ* is generated in the angular-delay domain like the CSI matrix, the **ĉ***ₜ* may be treated as the predicted CSI matrix H̅_{*t*.} In this case, the residual **H***ₜ* - **H̅***ₜ* may be encoded for feedback. On the other hand, if the **ĉ***ₜ* is generated in the feature domain, the **ĉ***ₜ* may be used as a condition related to the encoding of the **H***ₜ* (e.g., conditional coding). In this case, the higher dimensionality of the context **ĉ***ₜ* in the feature domain may provide a richer and more correlated condition for the encoding of the **H***ₜ*. The operation of obtaining the context **ĉ***ₜ* from the **D̂***ₜ* and **Ĥ**_{*t*-1} may be performed by the context generator of FIG. 26. The context generator may be implemented based on a neural network. To implement a context generator, it is also possible to benchmark techniques used in video compression, such as warping functions. The **ĉ***ₜ* may be fed as a condition to a contextual encoder/decoder neural network, and used to encode a CSI instance **H***ₜ* into a latent vector **y***ₜ* or to decode **Ĥ***ₜ* from **ŷ***ₜ*.

In an embodiment, the system based on various embodiments may utilize an entropy bottleneck layer. The entropy bottleneck layer is an example of the first quantization and entropy encoder 2602, the first entropy model 2620, and the first entropy decoding and dequantizer 2604 of FIG. 26a, or an example of the second quantization and entropy encoder 2612, the second entropy model 2622, and the second entropy decoding and dequantizer 2614. The entropy bottleneck layer is a neural network designed to jointly optimize transmission rate and distortion. The entropy bottleneck layer has been introduced for deep learning-based CSI feedback, and the entropy bottleneck layer may be adopted for CSI compression/reconstruction based on various embodiments. An example of the structure of the entropy bottleneck layer is shown in FIG. 27a.

FIG. 27a shows an example of an entropy bottleneck layer for entropy encoding/decoding based on an embodiment of the present disclosure. Referring to FIG. 27a, the entropy bottleneck layer includes a quantizer 2712, an entropy encoder 2714, an entropy decoder 2722, a dequantizer 2724, an entropy model 2726.

Referring to FIG. 27a, a quantizer 2712 quantizes an input vector, and an entropy encoder 2714 entropy-codes the quantized vector. This generates a bit stream representing the input vector. The bit stream passes through a channel and is input to an entropy decoder 2722, which entropy-decodes the bit stream. A dequantizer 2724 dequantizes the decoded information. An entropy model 2726 provides probability distribution information for entropy encoding/decoding.

The channel matrix H may generate a compressed latent vector **y** through an encoder neural network. The entropy bottleneck layer takes **y** as input and outputs **ỹ** or **ŷ**, which is an approximation of **y**. Here, **ỹ** is the output during training and is the value obtained by adding uniform noise to y, and ŷ is the output during inference and may be obtained by performing quantization on **y.** In FIG. 27a, **y'** may be obtained by performing dequantization on **ŷ** again. In the case of the quantization operation performed during inference, since the gradient is 0 in almost all areas and the differentiation is not defined at the remaining points, a problem may occur in the backpropagation operation, which is the process of training the neural network.

To solve the problem, the entropy bottleneck layer may be transformed into a structure as in FIG. 27b during training. FIG. 27b shows an example of a structure for training the bottleneck layer based on an embodiment of the present disclosure. Referring to FIG. 27b, the entropy bottleneck layer outputs **ỹ** during training and stores the probability distribution *p*_{ỹ}(ỹ) as an entropy model. The stored entropy model p_{ỹ}(**ỹ**) is utilized to perform entropy coding/decoding for **ŷ** during inference. The probability mass function (PMF) *p*_{ŷ}(**ŷ**) required for entropy coding/decoding **ŷ** may be obtained from the stored *p*_{ỹ}. The compressed latent vector **y** during inference through the entropy bottleneck layer may be represented as a bit stream.

An entropy model may have a structure as shown in FIG. 28a. FIG. 28a shows an example of an entropy model based on an embodiment of the present disclosure. Referring to FIG. 28a, the entropy model includes a temporal prior encoder 2812, a hierarchical prior encoder 2814, a prior fusion unit 2816. Additionally, the entropy model may further include a spatial prior encoder 2818.

The temporal prior encoder 2812 generates temporal priors based on context information. The context information is generated based on the temporal correlation of the channel, for example, the Doppler characteristic. Furthermore, the temporal prior encoder 2812 generates information related to the prior distribution of the context information. The temporal prior encoder 2812 may have a neural network structure.

The hierarchical prior encoder 2814 generates a hierarchical prior based on a latent vector representing a channel (hereinafter, referred to as a "channel latent vector"). Specifically, the hierarchical prior encoder 2814 may include a prior distribution related to at least one parameter of a prior distribution for the latent vector, for example, a prior distribution related to a mean and/or a standard deviation. To this end, based on an embodiment, the hierarchical prior encoder 2814 may include at least one of a hierarchical prior encoder, a quantizer, an entropy encoder, an entropy decoder, or a hierarchical prior decoder. For example, the hierarchical prior encoder 2814 included in a transmitter may include a hierarchical prior encoder, a quantizer, an entropy encoder, an entropy decoder, a hierarchical prior decoder. The hierarchical prior encoder 2814 included in a receiver may include an entropy decoder, a hierarchical prior decoder. For the operation of the hierarchical prior encoder 2814 of the receiver, the transmitter may transmit a value including the output of the quantizer as side information to the receiver. Specifically, the information transmitted as side information may include the output of the hierarchical prior encoder that has undergone quantization and entropy coding. Here, the hierarchical prior encoder and the hierarchical prior decoder may have a neural network structure.

The prior fusion unit 2816 combines temporal priors and hierarchical priors. That is, the prior fusion unit 2816 may generate parameters (e.g., a mean vector, a standard deviation vector, etc.) of the prior distribution of the channel latent vector as distribution information used for entropy encoding/decoding. Here, the prior fusion unit 2816 may have a neural network structure.

Additionally, a spatial prior encoder 2818 may be further included. The spatial prior encoder 2818 may be used in conjunction with the temporal prior encoder 2812 or the hierarchical prior encoder 2814 to perform a corresponding role, and may generate a spatial prior based on the quantization result for the latent vector. If the spatial prior encoder 2818 is further included, a prior fusion unit 2816 fuses the temporal prior, the hierarchical prior, and the spatial prior.

The structure of the entropy model is described with reference to FIG. 28a. Meanwhile, referring to FIGs. 26a and 26b, each of the transmitter and the receiver includes two entropy models. Based on various embodiments, each of the two entropy models may have the structure shown in FIG. 28a, or one of the entropy models may have a structure different from the structure shown in FIG. 28a. For example, one of the entropy models may be composed solely of the hierarchical prior encoder 2814 shown in FIG. 28a.

Based on an embodiment, the first entropy model 2620 or the first entropy model 2670 may have a structure as shown in FIG. 28b. FIG. 28b shows an example of an entropy model that operates based on a channel latent vector based on an embodiment of the present disclosure. In FIG. 28b, Q performs quantization, arithmetic encoding/arithmetic decoding (AE/AD) performs entropy coding/decoding, and hierarchical prior encoder/decoder (HPE/HPD) encodes/decodes hierarchical priors. Here, HPE and HPD may be implemented as neural networks. Context **ĉ***ₜ*, which is information corresponding to temporal correlation, is coded as a temporal prior through a temporal prior encoder neural network. Temporal priors are used in prior fusion along with hierarchical priors. Prior fusion may also be implemented using a neural network. By fusing temporal and hierarchical priors using a prior fusion neural network, the parameters of the prior distribution for **y***ₜ* (e.g., the mean vector ***µ**ₜ* and the standard deviation vector **σ***ₜ*) may be obtained. In prior fusion, in addition to the hierarchical and temporal priors, a third prior (e.g., spatial correlation) may also be fused.

Based on an embodiment, the second entropy model 2622 or the first entropy model 2672 may have a structure as shown in FIG. 28c. FIG. 28c shows an example of an entropy model operating based on a Doppler latent vector based on an embodiment of the present disclosure. In FIG. 28c, Q performs quantization, EC/ED performs entropy coding/decoding, and HPE/HPD encodes/decodes hierarchical priors. Here, HPE and HPD may be implemented as neural networks. The hierarchical prior ***g**ₜ* may include information about a prior distribution for the Doppler latent vector **d***ₜ* (e.g., a mean vector ***µ***'*ₜ* and a standard deviation vector ***σ***'*ₜ*). Therefore, by decoding **ĝ***ₜ* through HPD, ***µ***'*ₜ* and **σ**'*ₜ* may be obtained. ***µ***'*ₜ* and **σ**'*ₜ* may be utilized for entropy coding/decoding for the Doppler latent vector.

As described above, systems based on various embodiments may utilize temporal priors and contexts. The temporal priors may be extracted as follows. First, it is assumed that the channel matrix **H***ₜ* is represented in the angular-delay domain. It is known that Doppler terms of different paths in the angular-delay domain are less entangled with each other than in the space-frequency domain. However, various embodiments of the present disclosure are not limited to channel matrices in a specific domain, such as the space-frequency domain or the angular-delay domain. For example, the channel matrix may be represented in a 3D tensor format in a 2D space-1D frequency domain, or in a tensor format in a 3D angular-delay domain including an elevation angle, an azimuth angle, a tap of delay. Alternatively, the channel matrix based on various embodiments of the present disclosure may be represented in other domains.

The Doppler effect may be extracted in the angular-delay domain. For convenience of explanation, **H***ₜ* is represented as a matrix, but in the case of a planar array, a 3D angular-domain tensor **H***ₜ*, where each component corresponds to the elevation angle, azimuth angle, tap of delay, may be used to estimate the Doppler effect. Conceptually, the Doppler-related information corresponds to the difference between **H***ₜ* and **H**_{*t*-1}. Therefore, as a conceptually simple method, a subtraction operation may be performed on two consecutive channel matrices to extract the Doppler information **D***ₜ*. That is, a subtraction operation may be performed to subtract the previous channel matrix **H**_{*t*-1}, from the current channel matrix **H***ₜ*. Since the decoder may use the previously decoded CSI matrix **Ĥ**_{*t*-1}, instead of the previous CSI matrix **H**_{*t*-1}, Doppler-related information may be obtained by subtracting **Ĥ**_{*t*-1} from **H***ₜ*. That is, **D***ₜ* = **H***ₜ* - **Ĥ**_{*t*-1}. However, based on other embodiments, more complex operations and processes rather than simple subtraction may be required, and for example, a neural network may be utilized. A Doppler estimator based on an embodiment of the present disclosure may include a neural network that takes as input the current CSI matrix **H***ₜ* and the previously decoded CSI matrix **Ĥ**_{*t*-1}, and outputs Doppler information **D***ₜ*. The Doppler estimator may be implemented based on a conventional channel prediction neural network. In addition, non-deep learning-based channel prediction approaches (e.g., Prony-based, autoregressive, matrix pencil, etc.) may be considered as a means for implementing the Doppler estimator.

As described above, based on the framework for the CSI feedback method based on an embodiment, the transmitter includes a Doppler estimator. The Doppler information **D***ₜ*, which is the output of the Doppler estimator, is encoded into a Doppler latent vector **d*ₜ*** through a Doppler encoder neural network. The Doppler latent vector **d*ₜ*** may be converted into a bit stream through an entropy bottleneck layer. The quantized Doppler latent vector **d̂***ₜ*, may be decoded into reconstructed Doppler information **D̂**ₜ through a Doppler decoder neural network.

The Doppler-related information and the Doppler latent vector represented in the present disclosure are intermediate information or signals obtained in a data-driven manner from the channel information of the current time and the channel information of the previous time, and it is not easy to clearly identify or accurately explain the physical meaning of the signal due to the characteristics of neural networks and deep learning. However, since the above-mentioned information or signals include information related to the Doppler shift, the present disclosure refers to them as Doppler-related information and the Doppler latent vector. However, in the present disclosure, the Doppler latent vector, which is a signal transmitted and/or received between a UE and a base station, may actually include information related to temporal correlation other than the Doppler shift. Unlike traditional Doppler estimators based on mathematical model-driven methods, the Doppler-related information, which is the output of a Doppler estimator that may be implemented as a data-driven neural network based on various embodiments of the present disclosure, may be extracted so that higher-dimensional, rich temporal correlation information that may be represented in the feature domain may be better reflected.

In the present disclosure, the Doppler estimator takes as input a previously decoded channel instance and a current measured channel instance, represented in the angular-delay domain, and outputs Doppler-related information extracted from the angular-delay domain or a specific feature domain. This differs from a Doppler estimator that typically takes as input a received signal and outputs the frequency shift itself. However, if a traditional Doppler estimator is utilized, and appropriate modifications are applied, the traditional Doppler estimator may also be used as the Doppler estimator based on an embodiment of the present disclosure.

Afterwards, the context **ĉ***ₜ* is obtained from the reconstructed Doppler information **D̂***ₜ* and the previously decoded CSI matrix **Ĥ**_{*t*-1}. If the **ĉ***ₜ* is generated in the angular-delay domain like the CSI matrix, the **ĉ***ₜ* may be treated as the predicted CSI matrix **H̅***ₜ*. In this case, the residual **H***ₜ* - **H̅***ₜ* may be encoded for feedback. On the other hand, if the **ĉ***ₜ* is generated in the feature domain, the **ĉ***ₜ* may be used as a condition related to the encoding of the **H***ₜ* (e.g., conditional coding). In this case, the higher dimensionality of the context **ĉ***ₜ* in the feature domain may provide a richer and more correlated condition for the encoding of the **H***ₜ*. The operation of obtaining the context **ĉ***ₜ* from the **D̂***ₜ* and **Ĥ**_{*t*-1} may be performed by the context generator 2618 of FIG. 26a. The context generator may be implemented based on a neural network. To implement a context generator 2618, it is also possible to benchmark techniques used in video compression, such as warping functions. The **ĉ***ₜ* may be input as a condition to a contextual encoder/decoder neural network, and used to encode a CSI instance **H***ₜ* into a latent vector **y***ₜ* or to decode **Ĥ***ₜ* from **ŷ***ₜ*.

As described above, based on various embodiments, the context **ĉ***ₜ* may be used to encode or decode the CSI instance **H***ₜ* into the channel latent vector **y***ₜ*. Furthermore, the context **ĉ***ₜ* may also be used to represent the latent vector **y***ₜ* as a bit stream. Specifically, the context **ĉ***ₜ* generated through the context generator is information required for the entropy model of the entropy bottleneck layer for transmitting and receiving the latent vector **y***ₜ*. An example of the entropy model based on an embodiment of the present disclosure is as described above with reference to FIG. 28a. That is, an example of the entropy model required for entropy coding (e.g., arithmetic coding) for transmitting and receiving the channel latent vector **y***ₜ* is as described above with reference to FIG. 28a.

Context **ĉ***ₜ*, which is information corresponding to temporal correlation, is coded as a temporal prior through a temporal prior encoder neural network. Temporal priors are used in prior fusion along with hierarchical priors. Prior fusion may also be implemented using a neural network. By fusing temporal and hierarchical priors using a prior fusion neural network, the parameters of the prior distribution for **y***ₜ* (e.g., the mean vector ***µ**ₜ* and the standard deviation vector **σ**ₜ) may be obtained. In prior fusion, in addition to the hierarchical and temporal priors, a third prior (e.g., spatial correlation) may also be fused.

### Obtaining an entropy model

In the present disclosure, the entropy model *p*_{ŷ}(**ŷ**) or *p*_{d̂}(**d̂**) may be obtained from the parameter *p*_{ỹ}(**ỹ**) or p_{d̃}(**d̃**). This may be explained below through the graph of FIG. 34. For convenience of explanation, the reason why p_{ŷ}(ŷ) may be given from *p*_{ỹ}(**ỹ**) is explained, and the method of obtaining *p*_{d̂}(**d̂**) from *p*_{d̂}(**d̂**) is omitted as it is the same.

Referring to FIG. 29, *yᵢ*, *ỹ*ᵢ, and *ŷᵢ* each represent an arbitrary i-th element of **y**, **ỹ**, and **ŷ**, respectively, and *p_{yᵢ}, p_{ỹ}_{ᵢ},* and *p_{ỹ}*_{ᵢ} each represent the probability distribution for *yᵢ, ỹ*ᵢ, and *ŷ*ᵢ, respectively. *ŷᵢ* is the quantization result value for *yᵢ.* If the quantization bin size is configured to 1 and the median of each bin is taken as the representative value for quantization, then ŷᵢ may be expressed as *ŷᵢ* = round(*yᵢ*) if the median of each bin is configured to an integer. Furthermore, for any integer *n*, the result of the definite integral of *p_{yᵢ}*(*t*) over the interval $\left[n-\frac{1}{2},n+\frac{1}{2}\right]$*,* which corresponds to each quantization bin, corresponds to the *p_{ỹ}_{ᵢ}* value at integer *n.* Here, *t* is the integration variable.

*ŷᵢ* may be obtained by adding uniform noise to *yᵢ*. In this case, the interval length of the uniform distribution is 1, the same as the quantization bin size. Since the probability distribution of a random variable, defined as the sum of two random variables, is represented as a convolution with each of the two random variables, *p_{ỹ}_{ᵢ}* is obtained by performing a convolution operation between a uniform distribution of width 1 and *p_{yᵢ} .* Due to the characteristics of the PDF, a uniform distribution of length 1 is equivalent to a constant function having a function value of 1 within an interval of width 1. Therefore, performing a convolution operation between a uniform distribution of width 1 and *p_{yᵢ}* is equivalent to integrating *p_{yᵢ}* over the overlapping interval while shifting a boxcar function of unit width having a function value of 1. Therefore, if the moving integration interval is located exactly at $\left[n-\frac{1}{2},n+\frac{1}{2}\right]$*, p_{ỹ}_{ᵢ}* is calculated as the definite integral of *p_{yᵢ}*(*t*) with respect to $\left[n-\frac{1}{2},n+\frac{1}{2}\right]$*,* and this value matches the value of *p_{ŷ}_{ᵢ}* at integer *n.* That is, for any integer *n, p_{ỹ}_{ᵢ}* is equal to the value of *p_{ŷ}_{ᵢ}* at integer *n.*

The concepts of prior, hyperprior, and context

Generally, prior refers to the prior probability and is a concept contrasted with the posterior probability. The posterior probability is proportional to the product of the prior and the likelihood. The prior probability is the probability prior to a specific event occurring, meaning the probability before observational information related to the specific event is reflected.

In the present disclosure, the prior corresponds to a probabilistic model for the quantized representation required for entropy coding, namely, an entropy model *p*_{ŷ}(**ŷ**) or *p*_{d̂}(**d̂**). The reason the probabilistic model, i.e., the probability distribution, is called the prior is that the channel instance **H** or Doppler information **D** has not yet been given. In contrast, *p*_{ỹ}(**ỹ**|**H)** or *p*_{ỹ}(**d̃**|**D**)*,* which is the conditional probability given the channel instance **H** or Doppler information **D,** corresponds to the posterior probability.

Furthermore, in the present disclosure, since it is assumed that *p*_{ŷ}(**ŷ**) or *p*_{d̂}(**d̂**) is obtained from *p*_{ỹ}(**ỹ**) or *p*_{d̃}(**d̃**), respectively, the prior probability distributions *p*_{y}(**y**) and *p*_{ỹ}(**ỹ**) or *p*_{d̂}(**d̂**) and *p*_{d̃}(**d̃**) for the latent representation **y** or **d** may also all be treated as priors.

The prior to the parameters of an entropy model is called a hyperprior. Since the entropy model is referred to as a prior, the term hyperprior may be used in the sense of "a prior to a prior." That is, a hyperprior refers to information related to the parameters of an entropy model (e.g., standard deviation, mean, etc.). The hierarchical prior and the temporal prior in this disclosure may be understood as a type of hyperprior.

As described above, systems based on various embodiments may utilize a hyperprior or a hierarchical prior. The concept of a hyperprior may be applied to model the dependency between elements of a latent representation **y**. A hyperprior refers to a prior distribution *p***_{z̃}**(**z̃)** for the parameters (e.g., mean vector **µ** and standard deviation vector **σ**) of a prior distribution *p***_{ỹ}** for **y**. Here, **z** is another latent vector obtained by encoding the latent vector **y** and contains information about the hyperprior. **y** is input into another encoder neural network to obtain **z,** and **z** is input into another entropy bottleneck layer to output **z̃** and **ẑ**, and a bit stream for **z** may be generated. Because the structure for obtaining the hyperprior **z** is hierarchical, **z** may be referred to as a hierarchical prior. In this disclosure, since other priors other than **z** (e.g., temporal priors) are also used, to avoid confusion, **z** is hereinafter referred to as a hierarchical prior.

Additionally, in the present disclosure, context refers to information that may be given as a conditional input to a function block to cause that function block to operate conditionally. For example, in the case of a CSI encoder, even if the same channel instance **H** is input, the output **y** of the CSI encoder may differ based on what value the context is given. That is, the operation of the function block may vary based on the context. In particular, based on various embodiments of the present disclosure, a high-dimensional context in a feature domain may be extracted through learning so that the context may include rich information that may assist in the operation of the function block.

In other words, the context is used not only to encode or decode a CSI instance into a latent vector, but also to represent a latent vector as a bit stream. Specifically, the context generated by the context generator is the information necessary for the operation of the entropy model of the entropy bottleneck layer for the transmission and reception of the latent vector.

FIG. 30 shows an example of a CSI feedback procedure based on an embodiment of the present disclosure. FIG. 30 is an example of CSI feedback, and the CSI feedback procedure based on various embodiments does not necessarily have to include all of the operations shown, but may include only a part of the procedure described below. For example, the order of signaling may be different, some signaling may be omitted, or additional signaling other than that described may be performed. In FIG. 30, the UE 3010 is an encoder-side device and includes an encoder neural network, and the base station 3020 is a decoder-side device and includes a decoder neural network. Additionally, the UE 3010 may further include a decoder neural network.

Referring to FIG. 30, in steps S3001-1 through S3001-N, the base station 3020 transmits reference signals, e.g., CSI-RS, to the UE 3010. The CSI-RS may be transmitted periodically, non-periodically, or semi-persistently. Although not shown in FIG. 30, the base station 3020 may transmit the CSI-RS after transmitting configuration information for the CSI-RS to the UE 3010.

In step S3003, the UE 3010 measures the channel instance **H**_{*t*-1} based on CSI-RS. Then, in step S3005, the UE 3010 outputs the channel latent vector ***y***ₜ₋₁ and the Doppler latent vector **d**_{*t*-1}. In step S3007, the base station 3020 restores the estimated **Ĥ**_{*t*-1}, of the channel instance.

In step S3009, the UE 3010 measures a channel instance **H***ₜ* based on CSI-RS. Then, in step S3011, the UE 3010 outputs a channel latent vector **y***ₜ* based on context information **č***ₜ* and the channel instance **H***ₜ*. At this time, a hierarchical prior **z***ₜ* for the channel latent vector **y***ₜ* may be obtained. In step S3013, the UE 3010 outputs a Doppler latent vector **d***ₜ* based on Doppler information **D***ₜ*. At this time, a hierarchical prior **g***ₜ* for the Doppler latent vector **d***ₜ* may be obtained.

In step S3015, the UE 3010 transmits a quantized and entropy-coded channel latent vector **y***ₜ* and a hierarchical prior **z***ₜ*. In step S3017, the UE 3010 transmits a quantized and entropy-coded Doppler latent vector **d***ₜ* and a hierarchical prior **g***ₜ*.

That is, the UE 3010 quantizes and entropy-codes the channel latent vector **y***ₜ* and the Doppler latent vector **d***ₜ* and transmits them to the base station 3020, and also quantizes and entropy-codes the hierarchical priors **z***ₜ* and **g***ₜ* for **y***ₜ* and **d***ₜ* and transmits them to the base station 3020. That is, the UE 3010 transmits **z***ₜ* and **g***ₜ* to the base station 3020 as side information for **y***ₜ* and **d***ₜ*. In this process, the channel latent vector **y***ₜ* and the hierarchical prior **z***ₜ* for the channel latent vector **y***ₜ*, and the Doppler latent vector **d***ₜ* and the hierarchical prior **g***ₜ* for the Doppler latent vector **d***ₜ*, respectively, are each converted into a sequence of symbols such as a bitstream by entropy-coding. For convenience of explanation, the present disclosure considers a bitstream as a sequence of symbols, but binary transformation is merely an example, and the embodiments of the present disclosure are not limited to binary transformation.

In step S3019, the base station 3020 restores Doppler information **D̂***ₜ* based on the restored Doppler latent vector **d̂***ₜ*. In step S3021, the base station 3020 generates context **ĉ***ₜ* based on the restored Doppler information **D̂***ₜ* and the restored channel instance **Ĥ**_{*t*-1}. In step S3023, the base station 3020 restores channel instance **Ĥ***ₜ* based on the context **ĉ***ₜ* and the restored channel latent vector **ŷ***ₜ*.

Based on the procedure based on the above-described embodiment, the information signaled from the UE to the base station is the channel latent vector **y***ₜ* and a hierarchical prior **z***ₜ* for **y***ₜ*, and the Doppler latent vector **d***ₜ* and a hierarchical prior **g***ₜ* for **d***ₜ*. As described with reference to FIG. 30, the base station transmits a reference signal or a pilot such as CSI-RS, and the UE measures channel information **H***ₜ* at the current time *t* using the pilot. The UE compresses the measured current CSI matrix **H***ₜ* through a CSI encoder and obtains the channel latent vector **y***ₜ*. At this time, the CSI encoder compresses the channel matrix **H***ₜ* based on the context vector. Here, the context vector at the encoder side may differ from the context vector **ĉ***ₜ* at the decoder side.

In the case of the procedure exemplified in FIG. 30, the feedback transmission rate (feedback rate) may be adaptively adjusted based on channel variation. However, in an actual wireless communication system, adjustment of the channel feedback rate may be required due to factors other than channel variation, such as overhead control or traffic variation. Additionally, if a neural network model or parameter set is determined through end-to-end learning via offline training, the model or parameter set may be optimal in an average sense but suboptimal for a specific channel instance.

Accordingly, the present disclosure proposes additional fine-tuning techniques for channel instance-specific rate-distortion optimization. Specifically, the present disclosure proposes a hyperprior-based channel feedback framework operation method that enables tuning of the feedback rate due to various factors, such as channel changes, while also allowing for channel instance-specific fine-tuning. Here, fine-tuning based on various embodiments may be understood as tuning of the input/output signals of a neural network model, rather than tuning of the neural network model or the parameter. In other words, the proposed technique relates to the optimization of the signal transmitted from the encoder side to the decoder side (hereinafter referred to as the 'transmitted signal'). Accordingly, fine-tuning based on various embodiments may be referred to or understood as "pre-/post-filtering" or "pre-/post-processing" of the input/output signals.
component-wise Mathematical Description for Problem Formulation

The fine-tuning technique described below may be applied to the aforementioned CSI feedback framework. However, the proposed technique may also be applied to the algorithm or the CSI feedback framework of another structure. That is, the inner function based on the embodiments described below may be utilized in any CSI feedback method that uses a hierarchical prior as side latent information. Therefore, the proposed technique described below may be utilized in a neural network structure for all CSI compression/reconstruction based on the various hierarchical prior. For example, in addition to the hierarchical prior for the channel latent and the hierarchical prior for the Doppler latent corresponding to temporal correlation information described in this disclosure, hierarchical priors for spatial correlation, frequency correlation, angular correlation, delay correlation, etc., may be considered. Furthermore, the outer function based on the embodiments described below may be utilized for the operation of neural network structures for various CSI compression/recovery optimized in terms of rate-distortion.

Hereinafter, the present disclosure mathematically represents each component of the channel feedback framework based on the Hyperprior for problem formulation. The components of the channel feedback framework based on the Hyperprior are as shown in [Table 2] below. Hereinafter, for convenience of explanation, some components may be described as a single component. Also, for convenience of explanation, encoder-side information and decoder-side information may be described without distinction. For example, **ĉ***ₜ* and **č**ₜ may be represented as **ĉ***ₜ* without distinction. That is, a situation is assumed where the signal is decoded without error even if passing through a wireless channel. For convenience of explanation, the subscript *t* representing time is omitted, and instead, the symbol ''' is used to represent the previous time. For example, **Ĥ**' may be understood as **Ĥ**_{*t*-1}, the previously decoded CSI matrix.

**[Table 2]**

| components | explanation |
|---|---|
| Channel encoder | In FIG. 26c, the channel encoder *f_{c},* represented as a contextual CSI encoder neural network, is a neural network having *ϕ_{c}* as a parameter set or model, which processes a channel instance **H** as an input and a context **ĉ** as a conditional input, and outputs channel latent information **y**. |
| *f_{c}*: **y** = *f_{c}*(**H**\|**ĉ**, *ϕ_{c}*) | |
| Channel decoder | In FIG. 26c, the channel encoder *h_{c}*, represented as a contextual CSI decoder neural network, is a neural network having *θ_{c}* as a parameter set or model, which processes quantized channel latent information **ŷ** as input and context **ĉ** as a conditional input, and outputs a restored channel instance **Ĥ**. |
| *h_{c}*: **Ĥ** = *h_{c}*(**ŷ**\|**ĉ**, *θ_{c}*) | |
| Channel hierarchical prior encoder | In FIG. 28b, corresponding to HPE, it encodes a hierarchical prior **z** from channel latent information **y**. The channel hierarchical prior encoder *f_{z}* is a neural network that has *ϕ_{z}* as a parameter set or model. |
| *f_{z}:* **z** *= f_{z}*(**y**\|*ϕ_{z}*) | |
| Entropy model for channel latent | This corresponds to FIG. 28b and is a component represented as an entropy model in FIF. 26c. The entropy model for channel latent information **ŷ** has *θ_{y}* as a parameter set and represents the probability distribution (e.g., probability mass function (PMF)) for channel latent information **ŷ** given a hierarchical prior **ẑ** and context **ĉ**. Here, the parameter set *θ_{y}* refers to the parameter set or model for the HPD, temporal prior encoder, and prior fusion neural network in FIG. 28b. That is, *θ_{y}* may be understood as the parameter set or model for all three components. |
| *p*_{ŷ\|ẑ*,*ĉ}(**ŷ**\|**ẑ***,***ĉ***,θ_{y})* | |
| Entropy model for channel hierarchical prior | The entropy model for a hierarchical prior **ẑ** has *ψ_{z}* as a parameter set. That is, *ψ_{z}* is the set of parameters parameter set for the probability distribution of **ẑ**. |
| p_{ẑ}(**ẑ**\|*ψ_{z}*) | |
| Doppler estimator and Doppler encoder | A single component comprising a two-component Doppler estimator and a Doppler encoder neural network in FIG. 26c. *f_{D}* is a neural network having *ϕ_{D}* as a parameter set or model, which processes channel instances **H** and previously decoded channel instances **Ĥ'** as inputs and outputs Doppler latent information **d.** Here, the parameter set *ϕ_{D}* refers to the parameter set or model for the Doppler estimator and Doppler encoder neural network of FIG. 26c. |
| *f_{D}*: **d** *= f_{D}*(**H**\|**Ĥ***', ϕ_{D}*) | |
| | That is, *ϕ_{D}* is the parameter set or model for both components. For convenience, in this disclosure, *f_{D}* may simply be referred to as a Doppler encoder. That is, in this disclosure, the Doppler encoder *f_{D}* may be understood to include a Doppler estimator. |
| Doppler decoder and context generator | A single component comprising a Doppler decoder neural network and a context generator in FIG. 26c. *h_{D}* is a neural network having *θ_{D}* as a parameter set or model, which processes quantized Doppler latent information **d̂** and a previously decoded channel instance **Ĥ'** as inputs and outputs a context **ĉ**. Here, the parameter set *θ_{D}* refers to the parameter set or model for the Doppler decoder neural network and the context generator in FIG. 26c. That is, *θ_{D}* is the parameter set or model for both components. For convenience, in this disclosure, *h_{D}* may simply be referred to as a Doppler decoder. That is, in this disclosure, the Doppler decoder *h_{D}* may be understood to include a context generator. |
| *h_{D}:* **ĉ** *= h_{D}*(**d̂**\|**Ĥ***', θ_{D}*) | |
| Doppler hierarchical prior encoder | It corresponds to the HPE of FIG. 28c and encodes a hierarchical prior g from Doppler latent information **d.** The Doppler hierarchical prior encoder *f_{g}* is a neural network that has *ϕ_{g}* as a parameter set or model. |
| *f_{g}:* **g** = *f_{z}*(**d**\|*ϕ*_{g}) | |
| Entropy model for doppler latent | This corresponds to FIG. 28c, which is omitted and not explicitly revealed in FIG. 26c. The entropy model for Doppler latent information **d̂** has *θ_{d}* as a parameter set and represents the probability distribution (e.g., PMF) for Doppler latent information **d̂** under given hierarchical prior **ĝ**. Here, the parameter set *θ*_{d} refers to the parameter set or model for the HPD in FIG. 28c. |
| *p***_{d̂}**_{**\|**ĝ}(**d̂**\|**ĝ**, *θ_{d}*) | |
| | That is, *θ_{d}* is the parameter set or model of the hierarchical prior decoder neural network. |
| Entropy model for Doppler hierarchical prior | The entropy model for a hierarchical prior **ĝ** has *ψ_{g}* as a parameter set. That is, *ψ_{g}* is the set of parameters for the probability distribution of **ĝ**. |
| *p*_{ĝ}(**ĝ**\|*ψ*_{g}) | |

### outer function

An outer function corresponds to a procedure performed before a model used by a UE and a base station is determined. In contrast, an inner function to be described later corresponds to a procedure performed from after a model is determined until a model transfer occurs again. The outer function is a procedure related to how a model ID may be determined and based on what the model ID may be determined if the model transfer is performed by signaling the model ID.

To optimize a channel feedback framework based on the hyperprior including at least one of the components exemplified in [Table 2] in terms of rate-distortion performance, a loss function may be defined as shown in [Equation 3] below. [Equation 3] $L \left(H\right) = - log \left({p}_{\hat{y} \left|\hat{z}, \hat{c}\right.}\left(\hat{y}\left|\hat{z}, \hat{c}\right.,{θ}_{y}\right)\right) - log \left({p}_{\hat{z}}\left(\hat{z}\left|{ψ}_{z}\right.\right)\right) - log \left({p}_{\hat{d} \left|\hat{g}\right.}\left(\hat{d}\left|\hat{g}, {θ}_{d}\right.\right)\right) - log \left({p}_{\hat{g}}\left(\hat{g}\left|{ψ}_{g}\right.\right)\right) + λδ \left(H, \hat{H}\right)$

In [Equation 3], 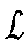 (**H**) is the loss function, **ŷ**, **ẑ**, **d̂, ĝ** are the transmitted signals, **ĉ** is the context information, *θₖ* is the parameter set for the entropy model for *k, ψₖ* is the parameter set for the entropy model for *k,* **H** is the channel instance, **Ĥ** is the decoded channel, *p*_{A} (*A*|*B*, *C*) is the probability distribution of A given B and C, δ(·,·) is the distortion loss, and *λ* is the weighting factor for the distortion loss. For example, the distortion loss may be the mean square error (MSE).

In a loss function such as [Equation 3], *λ* is a positive value configured prior to optimization to optimize the aforementioned sets of parameters, and as the value of *λ* is configured larger, optimization is performed in the direction of reducing distortion rather than reducing the transmission rate. That is, if the value of *λ* is configured larger, a channel feedback model capable of achieving higher reconstruction performance through a higher feedback transmission rate on average will be obtained. On the other hand, if the value of *λ* is configured smaller, a channel feedback model will be obtained in which the wireless resource overhead for channel feedback is reduced by lowering the feedback transmission rate, even if the reconstruction performance is not better on average. Therefore, *λ* may be referred to as a 'rate-distortion trade-off hyperparameter', 'rate-distortion trade-off parameter', 'rate-distortion adjustment parameter', 'rate-distortion control parameter', or other terms having an equivalent technical meaning. Generally, in the context of deep learning, 'parameters' refer to the weights and biases of a neural network that are learned through training, while 'hyperparameters' refer to values that are configured prior to training and used to control the learning process but are not updated during training.

In a general neural image compression model, if the loss function is given in the form 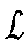 = *R* + *λD*, the general rate-distortion trade-off based on the value of the hyperparameter *λ* is conceptually represented as in FIG. 31. FIG. 31 shows an example of the rate-distortion trade-off in a compression model. In FIG. 31, R represents the rate and D represents the distortion.

Given a training set for channel instances, neural network parameter sets/models for the aforementioned components (e.g., at least one of the components exemplified in [Table 2]) may be obtained through learning that minimizes the loss function. [Equation 4] ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗} = arg {min}_{{ϕ}_{c} , {θ}_{c} , {ϕ}_{z} , {θ}_{y} , {ψ}_{z} , {ϕ}_{D} , {θ}_{D} , {ϕ}_{g} , {θ}_{d} , {ψ}_{g}} {E}_{H ∼ T} \left[L\left(H\right)\right]$

In [Equation 4], ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ represents the parameter set of the framework, 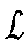 (**H**) represents the loss function, **H** represents the channel instance, 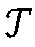 represents the training set, and ${E}_{H ∼ T} \left[\right]$ represents the expectation operator.

Here, if the value of *λ* in the loss function 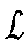 (**H**) is configured differently, the parameter set ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ corresponding to the optimized model may be determined differently. That is, the parameter set ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ depends on of the loss function.

In the following description, it is assumed that a model/parameter set corresponding to ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ has already been determined through offline training and deployed to the UE and base station. Additionally, it is assumed that if the encoder-side neural network model and the decoder-side neural network model form a pair with each other, there are multiple pairs of models. Accordingly, the present disclosure proposes a method for performing model transitions by the UE and the base station signaling to each other a value corresponding to *λ* as the ID of the neural network model for a hyperprior-based channel feedback algorithm. That is, for predefined values of *λ*, the UE and the base station possess a model for each value of *λ*, and may request a model transition by indicating the ID corresponding to each value of *λ* as the model ID.

A model ID may be determined or changed based on at least one factor. Based on an embodiment, the model ID may be changed based on the amount of traffic. For example, if the amount of traffic that a base station intends to transmit to a UE increases, it may be necessary to use a model corresponding to a higher *λ* value than the *λ* value corresponding to the currently used model. In this case, the base station may determine the value of *λ* for which channel reconstruction performance capable of satisfying downlink traffic requirements is expected, and may indicate or notify the UE to change to a model corresponding to the determined value of *λ*. Alternatively, the UE may determine the value of *λ* for which channel reconstruction performance capable of satisfying the required downlink traffic is expected, and may request the base station to change to a model corresponding to the determined value of *λ*.

Based on an embodiment, the model ID may be changed for overhead control. For example, a base station may determine a value of *λ* for which a feedback transmission rate is expected to satisfy the constraints of the uplink resources allocated to the UE, and indicate or notify the UE to change to a model corresponding to the determined value of *λ*. Alternatively, the UE may determine a value of *λ* for which a feedback transmission rate is expected to satisfy the constraints of the uplink resources allocated to itself, and request the base station to change to a model corresponding to the determined value of *λ*.

Based on various embodiments, a model ID based on hyperparameter *λ* values is predefined in the form of a table for both the encoder-side and the decoder-side, and the UE and the base station may perform AI/ML-based CSI feedback using the predefined table. In the present disclosure, the model ID may be referred to as a model pairing ID in that it is applicable to a two-sided model. That is, the encoder-side AI/ML model and the decoder-side AI/ML model may be defined as being paired with each other based on the model pairing ID or the model ID. [Table 3] below is an example of a table in which a model ID or model pairing ID may be determined based on a value of *λ*. [Table 3] is an example, and the specific contents of the table may vary.

**[Table 3]**

| Rate-distortion trade-off hyperparameter *λ* | Model(pairing) ID |
|---|---|
| *Representation:* *normalized as λ*/(1 + *λ*) | |
| 0.999 | 0 |
| 0.5 | 1 |
| 0.25 | 2 |
| 0.1 | 3 |
| 0.01 | 4 |
| ... | ... |

Based on various embodiments, the value of the hyperparameter *λ* may be related to the payload size for CSI feedback in addition to the model ID/model pairing ID. That is, the maximum payload size may be determined based on the value of *λ*. As the value of *λ* increases, the maximum payload size may be determined to be larger. Conversely, as the value of *λ* decreases, the maximum payload size may be determined to be smaller. Information related to the CSI payload size determined based on the value of *λ* may be transmitted from the base station to the UE prior to the CSI feedback operation as CSI configuration information. That is, the configuration information related to the CSI transmitted by the base station and received by the UE may include information related to the maximum CSI payload size determined based on the value of *λ*.

Based on the 3GPP NR standard document TS 38.214, a CSI report of a UE may include Part 1 and Part 2. Part 1 is used to identify the number of information bits in Part 2, and Part 1 may be fully transmitted before Part 2 is transmitted. Thus, Part 1 may have a fixed payload size. Information related to hyperparameters *λ* based on various embodiments may be reported by the UE to the base station, and information related to hyperparameters *λ* may be included in the Part 1 CSI report.

If a hyperparameter *λ* or a corresponding model ID/model pairing ID is determined by a base station, the UE may transmit capability information regarding the hyperparameter *λ* to the base station prior to the base station's determination related to the value *λ*. Based on an embodiment, the capability information related to the hyperparameter *λ* transmitted by the UE to the base station may include at least one of the maximum supported value of the hyperparameter *λ*, candidates for the hyperparameter *λ*, or a range of hyperparameter values of *λ*. That is, the UE may report information related to the maximum value among the values of *λ* supported by the UE to the base station. Alternatively, the UE may transmit information related to candidates or a range of values of *λ* supported by the UE or preferred by the UE to the base station.

### Inner function

If a model is determined by the aforementioned outer function, the following procedure, i.e., an inner function, may be performed for each channel instance based on the determined model. Given a training set for channel instances, a neural network parameter set/model for the components (e.g., at least one of the components exemplified in [Table 2]) may be obtained through learning by minimizing the loss function. [Equation 5] ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗} = arg {min}_{{ϕ}_{c} , {θ}_{c} , {ϕ}_{z} , {θ}_{y} , {ψ}_{z} , {ϕ}_{D} , {θ}_{D} , {ϕ}_{g} , {θ}_{d} , {ψ}_{g}} {E}_{H ∼ T} \left[L\left(H\right)\right]$

In [Equation 5], ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ represents the parameter set of the framework, L(H) represents the loss function, **H** represents the channel instance, 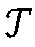 represents the training set, and ${E}_{H ∼ T} \left[\right]$ represents the expectation operator.

Here, the parameter set ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ corresponding to the optimized model may be determined differently based on the value of *λ* in the loss function 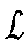 (**H**). The inner function may be performed if the value of *λ* is determined. In other words, the inner function is performed after the model ID is determined. Furthermore, through offline training, the model/parameter set corresponding to ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$ is determined, and the inner function is performed if they are deployed to the UE and the base station. That is, it is assumed that inference or testing is performed in a state that is sufficiently close to optimal from a learning perspective.

The model or parameter set in question is optimal in an average sense, but may be suboptimal for a specific channel instance. Therefore, there is room to achieve further optimization in terms of transmission rate distortion by performing fine-tuning in a manner specific to the channel instance during inference or testing operations. Such fine-tuning specific to a channel instance is an operation that optimizes or quasi-optimizes information such as **ŷ**, **ẑ**, **d̂, ĝ** transmitted from the encoder side to the decoder side while keeping the neural network model, i.e., parameter set ${ϕ}_{c}^{∗} , {θ}_{c}^{∗} , {ϕ}_{z}^{∗} , {θ}_{y}^{∗} , {ψ}_{z}^{∗} , {ϕ}_{D}^{∗} , {θ}_{D}^{∗} , {ϕ}_{g}^{∗} , {θ}_{d}^{∗} , {ψ}_{g}^{∗}$, fixed. It is expected that such fine-tuning will provide a transmission rate saving effect corresponding to 5 to 15%. The present disclosure proposes a procedure for fine-tuning the signals **ŷ**, **ẑ**, **d̂, ĝ** transmitted from the encoder side to the decoder side in a hyperprior-based channel feedback algorithm. In the present disclosure, **ŷ**, **ẑ**, **d̂, ĝ** may be collectively referred to as feedback information, transmission signals, or other terms having an equivalent technical meaning. Each of **ŷ**, **ẑ**, **d̂, ĝ** may be referred to as channel latent information, channel side latent information, Doppler latent information, Doppler side latent information, or other terms having an equivalent technical meaning. The **ŷ**, **ẑ**, **d̂, ĝ** described below may be understood as the result of applying processing (e.g., quantization) for morphological and/or representational transformation to **y***ₜ*, **z***ₜ,* **d**ₜ, and **g**ₜ described with reference to FIG. 30.

With the neural network parameter set/model fixed, for optimization specific to channel instances in terms of transmission rate-distortion, based on the same loss function defined for optimization of the neural network model, the optimization problem may be defined as [Equation 6] below. [Equation 6] $\hat{y} * , \hat{z} * , \hat{d} * , \hat{g} * = arg {min}_{\hat{y} , \hat{z} , \hat{d} , \hat{g}} L \left(H\right)$

In [Equation 6], **ŷ***, **ẑ***, **d̂***, **ĝ*** represent optimized transfer signals, **ŷ**, **ẑ**, **d̂, ĝ** represent transmitted signals, 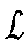 (**H**) represents the loss function, and **H** represents the channel instance.

Here, 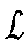 (**H**) may be understood as an unconstrained multi-objectives optimization problem, where the objectives are the minimum reconstruction error and the minimum bit length for each of the four transmission signals. That is, each of the five terms of 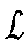 (**H**) corresponds to an objective. The optimal solution to a multi-objective problem may be given as a "Pareto Optimal" if no other objective may be improved without degrading any one of the objectives.

It is known that a necessary and sufficient condition for a solution to a multi- objective optimization problem to be Pareto optimal is satisfying the Karush-Kuhn-Tucker (KKT) condition. In general, let us consider a situation where a multi-objective optimization such as *ω** = arg min_{ω}(∑*ᵢ αᵢ* 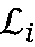 (ω)) is given. Here, 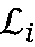 is the *i*-th objective to be minimized, *αᵢ* ≥ 0, and *Σᵢ αᵢ* = 1. In this case, a necessary and sufficient condition for the solution *ω** of the multi-objective optimization problem to be Pareto optimal is to satisfy the KKT condition as shown in [Equation 7] below. [Equation 7] ${\sum }_{i} {α}_{i} {∇}_{ω} {L}_{i} \left(ω*\right) = 0$

In [Equation 7], 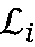 represents the i-th objective, *ω* represents the variable of interest, *αᵢ* represents the coefficient of the *i*-th objective, and ∇_{ω} represents the partial derivative with respect to *ω.* Therefore, *∇_{ω}* 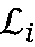 (*ω*) represents the gradient of the *i*-th loss function with respect to *ω.*

To apply the aforementioned general theory to the CSI framework, the loss function may be rearranged as shown in [Equation 8] below. [Equation 8] $L \left(H\right) = - log \left({p}_{\hat{y} \left|\hat{z}, \hat{c}\right.}\left(\hat{y}\left|\hat{z}, \hat{c}\right.,{θ}_{y}\right)\right) - log \left({p}_{\hat{z}}\left(\hat{z}\left|{ψ}_{z}\right.\right)\right) - log \left({p}_{\hat{d} \left|\hat{g}\right.}\left(\hat{d}\left|\hat{g}, {θ}_{d}\right.\right)\right) - log \left({p}_{\hat{g}}\left(\hat{g}\left|{ψ}_{g}\right.\right)\right) + λδ \left(H, \hat{H}\right)$

In [Equation 8], 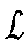 (**H**) represents the loss function, **ŷ**, **ẑ**, **d̂, ĝ** are the transmitted signals, **ĉ** is the context information, θ*ₖ* is the parameter set for the entropy model for *k, ψₖ* is the parameter set for the entropy model for *k,* **H** is the channel instance, **Ĥ** is the decoded channel, *p*_{A|B} (*A*|*B*, *C*) is the probability distribution of A given B and C, δ(·,·) is the distortion loss, and *λ* is the weighting coefficient for the distortion loss.

Each of the five terms constituting the loss function of [Equation 8] may be defined as a target as shown in [Equation 9] below. [Equation 9] $\begin{matrix}{L}_{1} \left(\hat{y}, \hat{z}, \hat{d}\right) = - log \left({p}_{y}\left(\hat{y};\hat{z},\hat{d},{θ}_{y},{θ}_{d},\hat{H}′\right)\right) \\ - log \left({p}_{\left.\hat{y}\right| \hat{z} , \hat{c}}\left(\left.\hat{y}\right|\hat{z},\hat{c},{θ}_{y}\right)\right) = - log \left({p}_{\left.\hat{y}\right| \hat{z} , \hat{c}}\left(\left.\hat{y}\right|\hat{z},{h}_{D}\left(\left.\hat{d}\right|\hat{H}′,{θ}_{D}\right),{θ}_{y}\right)\right) = - log \left({p}_{y}\left(\hat{y};\hat{z},\hat{d},{θ}_{y},{θ}_{d},\hat{H}′\right)\right) \\ {L}_{2} \left(\hat{z}\right) = - log \left({p}_{z}\left(\hat{z}; {ψ}_{z}\right)\right) \\ - log \left({p}_{\hat{z}}\left(\left.\hat{z}\right|{ψ}_{z}\right)\right) = - log \left({p}_{z}\left(\hat{z}; {ψ}_{z}\right)\right) \\ {L}_{3} \left(\hat{d}, \hat{g}\right) = - log \left({p}_{d}\left(\hat{d}; \hat{g}; {θ}_{d}\right)\right) \\ - log \left({p}_{\left.\hat{d}\right| \hat{g}}\left(\left.\hat{d}\right|\hat{g},{θ}_{d}\right)\right) = - log \left({p}_{d}\left(\hat{d}; \hat{g}; {θ}_{d}\right)\right) \\ {L}_{4} \left(\hat{g}\right) = - log \left({p}_{g}\left(\hat{g}; {ψ}_{g}\right)\right) \\ - log \left({p}_{\hat{g}}\left(\left.\hat{g}\right|{ψ}_{g}\right)\right) = - log \left({p}_{g}\left(\hat{g}; {ψ}_{g}\right)\right) \\ {L}_{5} \left(H, \hat{y}, \hat{d}\right) = δ \left(H,{h}_{c}\left(\left.\hat{y}\right|{h}_{D}\left(\left.\hat{d}\right|\hat{H}′,{θ}_{D}\right),{θ}_{c}\right)\right) \\ δ \left(H, \hat{H}\right) = δ \left(H,{h}_{c}\left(\left.\hat{y}\right|\hat{c},{θ}_{c}\right)\right) = δ \left(H,{h}_{c}\left(\left.\hat{y}\right|{h}_{D}\left(\left.\hat{d}\right|\hat{H}′,{θ}_{D}\right),{θ}_{c}\right)\right)\end{matrix}$

In [Equation 9], 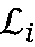 is the i-th objective, **ŷ**, **ẑ**, **d̂, ĝ** are the transmitted signals, **ĉ** is the context information, *θₖ* is the parameter set for the entropy model for *k, ψₖ* is the parameter set for the entropy model for *k,* **H** is the channel instance, **Ĥ** is the decoded channel, *θ_{D}* is the parameter set for *h_{D}* ( ), *θ_{c}* is the parameter set for the channel encoder, *p*_{A|B}(A|B*, C*) is the probability distribution of A given B and C, *p_{A}*(Â; *B*, *C*) is the probability distribution of A given B and C, and δ(·,·) represents the distortion loss.

Here, the coefficients may be configured as *α*₁ = *α*₂ = *α*₃ = *α*₄ = 1/(4 + *λ*) and *α*₅ = *λ*/(4 + *λ*) to satisfy the conditions *αᵢ* ≥ 0 and Σᵢ *α*ᵢ = 1. Therefore, the loss function may be re-expressed as shown in [Equation 10] below. [Equation 10] ${E}_{H ∼ T} \left[\frac{L \left(H\right)}{4 + λ}\right] = {E}_{H ∼ T} \left[{α}_{1}{L}_{1}\left(\hat{y}, \hat{z}, \hat{d}\right)+{α}_{2}{L}_{2}\left(\hat{z}\right)+{α}_{3}{L}_{3}\left(\hat{d}, \hat{g}\right)+{α}_{4}{L}_{4}\left(\hat{g}\right)+{α}_{5}{L}_{5}\left(H, \hat{y}, \hat{d}\right)\right]$

In [Equation 10], L(H) represents the loss function, *λ* represents the weighting coefficients for the distortion loss, **ŷ**, **ẑ**, **d̂, ĝ** are the transmitted signals, 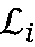 is the *i*-th objective, *αᵢ* is the coefficient of the i-th objective, 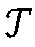 is the training set, ${E}_{H ∼ T} \left[\right]$ is the expectation operator, and **H** represents the channel instance.

Using a loss function like [Equation 9], the KKT condition for each of the transmission signals is expressed as [Equation 11] below. [Equation 11] $\begin{matrix}{E}_{H ∼ T} \left[{α}_{1}{∇}_{\hat{y}}{L}_{1}\left(\hat{y}, \hat{z}, \hat{d}\right)+{α}_{5}{∇}_{\hat{y}}{L}_{5}\left(H, \hat{y}, \hat{d}\right)\right] = 0 \\ {E}_{H ∼ T} \left[{α}_{1}{∇}_{\hat{z}}{L}_{1}\left(\hat{y}, \hat{z}, \hat{d}\right)+{α}_{2}{∇}_{\hat{z}}{L}_{2}\left(\hat{z}\right)\right] = 0 \\ {E}_{H ∼ T} \left[{α}_{1}{∇}_{\hat{d}}{L}_{1}\left(\hat{y}, \hat{z}, \hat{d}\right)+{α}_{3}{∇}_{\hat{d}}{L}_{3}\left(\hat{d}, \hat{g}\right)+{α}_{5}{∇}_{\hat{d}}{L}_{5}\left(H, \hat{y}, \hat{d}\right)\right] = 0 \\ {E}_{H ∼ T} \left[{α}_{3}{∇}_{\hat{g}}{L}_{3}\left(\hat{d}, \hat{g}\right)+{α}_{4}{∇}_{\hat{g}}{L}_{4}\left(\hat{g}\right)\right] = 0\end{matrix}$

In [Equation 11], 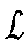 (**H**) represents the loss function, *λ* represents the weighting coefficients for the distortion loss, **ŷ**, **ẑ**, **d̂, ĝ** are the transmitted signals, 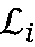 is the i-th objective, *αᵢ* is the coefficient of the i-th objective, 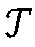 is the training set, ${E}_{H ∼ T} \left[\right]$ is the expectation operator, and **H** represents the channel instance.

Although the conditions are not 100% valid for each of every channel instance, they are valid in an average sense for channel instances in the training set. In the present disclosure, it is assumed that the conditions are valid to some extent for any channel instance in the test data set for inference.

The decoding order of the transmitted signals is the reverse of the encoding order, in the order **ĝ**, **d̂, ẑ**, **ŷ**. Therefore, first, looking at the KKT condition for **ĝ**, it is confirmed that ∇_{ĝ} (- log (*p_{d}*(**d̂**; **ĝ**, *θ_{d}*))) and ∇**_{ĝ}**(- log(*p_{g}* (**ĝ**; *ψ_{g}*))) cancel out on average (in expectation) if the neural network models for the hyperprior-based channel feedback algorithm are optimal, i.e., if training is complete. In fact, during inference, for any channel instance, the two gradients have a correlation coefficient close to - 1.

In the gradient-based optimization process, to reduce the bit length of Doppler latent information **d̂,** Doppler side latent information **ĝ** may be updated by shifting by a step size in the negative or opposite direction of ∇**_{ĝ}** ( - log (*p_{d}* (**d̂**; **ĝ**, *θ_{d}*))). However, the base station may not obtain ∇**_{ĝ}**(-log(*p_{d}* (**d̂**; **ĝ**, *θ_{d}* ))) before decoding **d̂**. Instead, since ∇_{ĝ} (- log(*p_{g}*(**ĝ**; *ψ_{g}*))), which has a strong negative correlation with ∇**_{ĝ}** (- log (*p_{d}* (**d̂**; **ĝ**, *θ_{d}*))), may be obtained by the base station even before decoding **d̂,** the present disclosure proposes utilizing ∇**_{ĝ}**(-log(*p_{g}*(**ĝ**; *ψ_{g}*))) to reduce the bit length of Doppler latent information **d̂.** This may be expressed mathematically as [Equation 12] below. [Equation 12] $\hat{g} ← \hat{g} + {η}_{g}^{∗} {∇}_{\hat{g}} \left(-log\left({p}_{g}\left(\hat{g}; {ψ}_{g}\right)\right)\right)$

In [Equation 12], **ĝ** is the Doppler side latent information, which is one of the transmitted signals, ${η}_{g}^{∗}$ is the optimal step size, ∇**_{ĝ}** is the partial derivative with respect to **ĝ**, *ψ_{g}* is the set of entropy model parameters with respect to **ĝ**, and *p_{A}*(**Â**; B, C) represents the probability distribution of A given B and C.

A procedure like [Equation 12] may be called a 'latent shift' in the sense that it shifts the Doppler-side latent information **ĝ**, which represents a hierarchical prior to the Doppler latent information. At this time, the optimal step size ${η}_{g}^{∗}$ may be obtained on the encoder side through brute force or other optimization techniques as shown in [Equation 13] below. [Equation 13] ${η}_{g}^{∗} = arg {min}_{{η}_{g}} \left(-log\left({p}_{d}\left(\hat{d};\hat{g}+{η}_{g}{∇}_{\hat{g}}\left(-log\left({p}_{g}\left(\hat{g}; {ψ}_{g}\right)\right)\right),{θ}_{d}\right)\right)\right)$

In [Equation 13], ${η}_{g}^{∗}$ is the optimal step size, *η_{g}* is the step size, **d̂** is the Doppler latent information which is one of the transmitted signals, **ĝ** is the Doppler side latent information which is one of the transmission signals, ∇_{ĝ} is the partial derivative with respect to **ĝ**, *ψ*_{g} is the parameter set of the entropy model with respect to **ĝ**, *θ*_{d} is the parameter set of the entropy model with respect to the Doppler latent information **d̂,** and *p_{A}*(**Â**; B, C) represents the probability distribution of A given B and C.

The optimal step size ${η}_{g}^{∗}$ for **ĝ**, obtained to minimize the bit length of **d̂** at the encoder-side, is signaled to the base station. The ${η}_{g}^{∗}$ information may be transmitted to the base station after being appropriately converted into a bit stream. Additionally, when encoding Doppler latent information **d̂** at the encoder-side, an entropy model given by Doppler-side latent information **ĝ**, on which a latent shift is performed, may be used.

Next, referring to [Equation 11], it may be seen that the KKT condition for **d̂** is more complex than the KKT conditions for other transmitted signals, which consist of two terms, because it includes three terms. Therefore, referring to the method of processing the KKT condition for **ĝ** previously, a method may be considered in which a latent shift procedure for Doppler latent information **d̂** is not performed, just as a latent shift procedure for Doppler side latent information **ĝ** was performed. However, **d̂** may be signaled after fine-tuning of Doppler latent information **d̂** is performed in a different way, and **d̂** may be decoded after **ĝ** is decoded. That is, based on another embodiment, if the KKT condition for **d̂** is defined differently, a latent shift for **d̂** may be performed.

Looking at the KKT condition for channel-side latent information **ẑ** in [Equation 11], when the neural network models for the hyperprior-based channel feedback algorithm are optimal, that is, when training is complete, ∇_{ẑ}(- log(*p_{y}* (**ŷ**; **ẑ**, **d̂**, *θ_{y}, θ_{d},* **Ĥ'** ))) and ∇_{ẑ}(-log(*p_{z}*(**ẑ**; *ψ_{z}*))) may cancel each other out on average (in expectation). In fact, during inference, for any channel instance, the two gradients have a correlation coefficient close to -1.

In a gradient-based optimization process, to reduce the bit length of channel latent information **ŷ**, channel-side latent information **ẑ** may be updated by shifting by a step size in the negative or opposite direction of ∇_{ẑ}(- log(*p_{y}* (**ŷ**; **ẑ**, **d̂**, *θ_{y}, θ_{d},* **Ĥ**' ))). However, the base station may not obtain ∇_{ẑ}(-log(*p_{y}*(**ŷ**; **ẑ**, **d̂**, *θ_{y}, θ_{d},* **Ĥ**' ))) before decoding **ŷ**. Instead, since ∇_{ẑ}(- log(*p_{z}*(**ẑ**; *ψ_{z}*))), which has a strong negative correlation with ∇_{ẑ}(- log(*p_{y}* (**ŷ; ẑ**, **d̂**, *θ_{y}, θ_{d},* **Ĥ'** ))), may be obtained by the base station even before decoding **ŷ**, the present disclosure proposes a latent shift utilizing ∇_{ẑ}*(-* log(*p_{z}*(**ẑ**; *ψ_{z}*))) to reduce the bit length of channel latent information **ŷ**. This may be expressed mathematically as [Equation 14] below. [Equation 14] $\hat{z} ← \hat{z} + {η}_{z}^{∗} {∇}_{\hat{z}} \left(-log\left({p}_{z}\left(\hat{z}; {ψ}_{z}\right)\right)\right)$

[Equation 14], **ẑ** is channel-side latent information, which is one of the transmitted signals, ${η}_{z}^{∗}$ is the optimal step size, ∇_{ẑ} is the partial derivative with respect to **ẑ**, *ψ_{z}* is the parameter set of the entropy model with respect to **ẑ**, and *p_{A}*(**Â**; B, C) represents the probability distribution of A given B and C.

The reason the procedure as in [Equation 14] is called a latent shift is that it shifts the channel-side latent information **ẑ**, which represents a hierarchical prior to the channel latent information. At this time, the optimal step size ${η}_{z}^{∗}$ may be obtained on the encoder-side through brute force or other optimization techniques as shown in [Equation 15] below. [Equation 15] ${η}_{z}^{∗} = arg {min}_{{η}_{z}} \left(-log\left({p}_{y}\left(\hat{y};\hat{z}+{η}_{z}{∇}_{\hat{z}}\left(-log\left({p}_{z}\left(\hat{z}; {ψ}_{z}\right)\right)\right),\hat{d},{θ}_{y},{θ}_{d},\hat{H}′\right)\right)\right)$

In [Equation 15], ${η}_{z}^{∗}$ is the optimal step size, *η_{z}* is the step size, **ŷ** is the channel latent information, **ẑ** is the channel side latent information, ∇**_{ẑ}** is the partial derivative with respect to **2,** *ψ_{z}* is the parameter set of the entropy model with respect to **2, d̂** is the Doppler latent information, *θ_{y}* is the parameter set of the entropy model with respect to **ŷ**, *θ_{d}* is the parameter set of the entropy model with respect to **d̂, Ĥ'** is the previously decoded channel instance, and *p_{A}* (**Â**; B, C) represents the probability distribution of A given B and C.

The optimal step size ${η}_{z}^{∗}$ for **ẑ,** obtained to minimize the bit length of **ŷ** at the encoder side, is signaled to the base station. The ${η}_{z}^{∗}$ information may be transmitted to the base station after being appropriately converted into a bit stream. Additionally, if encoding channel latent information **ŷ** at the encoder side, an entropy model given by channel-side latent information **ẑ**, on which latent shifting is performed, may be used.

Finally, looking at the KKT condition for channel latent information **ŷ** in [Equation 11], if the neural network models for the hyperprior-based channel feedback algorithm are optimal, that is, if training is complete, the gradient ∇_{ŷ}(- log(*p_{y}* (**ŷ**; **ẑ**, **d̂**, *θ_{y}, θ_{d},* **Ĥ**' ))) of the entropy model *p_{y}* with respect to **ŷ** and the weighted gradient *λ*∇*_{ŷ}* (δ(**H**, h_{c} (**ŷ**|*h_{D}* (**d̂**|**Ĥ**', *θ_{D}*), *θ_{c}*))) of the restoration error with respect to channel latent information **ŷ** may cancel each other out on average (in expectation). In fact, during inference, for any channel instance, the two gradients have a correlation coefficient close to -1.

In the gradient-based optimization process, to reduce the restoration error *δ*(**H**, *h_{c}* (**ŷ** | *h_{D}* (**d̂**|**Ĥ**', *θ_{D}*), *θ_{c}*)), the channel latent information ŷ may be updated by shifting by a step size in the negative or opposite direction of ∇**_{ŷ}** (δ(**H**, *h_{c}*(**ŷ**|*h_{D}* (**d̂**|**Ĥ**', *θ_{D}*), *θ_{c}*))). However, from the perspective of the base station corresponding to the decoder side, ∇**_{ŷ}** (δ(**H**, *h_{c}*(**ŷ**|*h_{D}* (**d̂|**Ĥ', *θ_{D}*), *θ_{c}*))) containing the true channel instance **H** is unobtainable information. Instead, ∇_{ŷ}(- log(*p_{y}* (**ŷ**; **ẑ**, **d̂**, *θ_{y}, θ_{d},* **Ĥ**' ))), which has a strong negative correlation with ∇**_{ŷ}** (δ(**H**, *h_{c}* (**ŷ**|*h_{D}* (**d̂**|**Ĥ**', *θ_{D}*), *θ_{c}*))), may be obtained at the base station after decoding **ĝ**, **d̂, ẑ**, and **ŷ**. Therefore, the present disclosure proposes a latent shift utilizing ∇_{ŷ}(-log(*p_{y}* (**ŷ**; **ẑ**, **d̂**, *θ_{y}, θ_{d},* **Ĥ'** ))) to reduce the restoration error. This may be expressed mathematically as [Equation 16] below. [Equation 16] $\hat{y} ← \hat{y} + {η}_{y}^{∗} {∇}_{\hat{y}} \left(-log\left({p}_{y}\left(\hat{y};\hat{z},\hat{d},{θ}_{y},{θ}_{d},\hat{H}′\right)\right)\right)$

In [Equation 16], **ŷ** is channel latent information, ${η}_{y}^{∗}$ is the optimal step size, ∇**_{ŷ}** is the partial derivative with respect to **ŷ**, **ẑ** is channel side latent information, **d̂** is Doppler latent information, *θ_{y}* is the parameter set of the entropy model with respect to **ŷ**, *θ_{d}* is the parameter set of the entropy model with respect to **d̂, Ĥ'** is the previously decoded channel instance, and *p_{A}*(**Â**; B, C) represents the probability distribution of A given B and C.

The reason the procedure as in [Equation 16] is called a latent shift is that it shifts the channel latent information **ŷ**. At this time, the optimal step size ${η}_{y}^{∗}$ may be obtained on the encoder side through brute force or other optimization techniques as shown in [Equation 17] below. [Equation 17] ${η}_{y}^{∗} = arg {min}_{{η}_{y}} \left(δ\left(H,{h}_{c}\left(\hat{y}+{η}_{y}^{∗}{∇}_{\hat{y}}\left(-log\left({p}_{y}\left(\hat{y};\hat{z},\hat{d},{θ}_{y},{θ}_{d},\hat{H}′\right)\right)\right)\left|{h}_{D}\left(\hat{d}\left|\hat{H}′,{θ}_{D}\right.\right),{θ}_{c}\right.\right)\right)\right)$

In [Equation 17], ${η}_{y}^{∗}$ is the optimal step size, *η_{y}* is the step size, **H** is the channel instance, *h_{c}*() is the channel decoder, **ŷ** is the channel latent information, ∇**_{ŷ}** is the partial derivative with respect to **ŷ, ẑ** is the channel side latent information, **d̂** is the Doppler latent information, *θ_{y}* is the parameter set of the entropy model for **ŷ**, *θ_{D}* is the parameter set of the entropy model for **d̂, Ĥ'** is the previously decoded channel instance, *h_{D}*( ) is the Doppler decoder and context generator, *θ_{D}* is the parameter set of *h_{D}* ( ), *θ_{c}* is the parameter set of the channel encoder, and *p_{A}*(**Â**; B, C) represents the probability distribution of A given B and C.

The optimal step size ${η}_{y}^{∗}$ for **ŷ**, obtained to minimize the restoration error at the encoder side, is signaled to the base station. The information ${η}_{y}^{∗}$ may be transmitted to the base station after being appropriately converted into a bit stream.

As with the various embodiments described above, fine-tuning of the representation values of the information transmitted for CSI feedback may be performed. The present disclosure describes operations and procedures performed by a base station and a UE based on the embodiments described above. In the following description, the UE is described as an encoder-side device and the base station as a decoder-side device. However, the proposed technology may be applied not only to UEs and base stations but also to various combinations of devices where channel feedback may be performed, such as UEs and UEs, base stations and base stations, UEs and other devices, base stations and other devices, etc.

FIG. 32 shows an example of a procedure for transmitting a CSI based on an embodiment of the present disclosure. FIG. 32 shows a method of operation of a UE.

Referring to FIG. 32, in step S3201, the UE receives configuration information related to CSI feedback. The configuration information may include at least one of information related to channel measurement operations, information related to feedback (e.g., format, resources, number of feedbacks, period, etc.) or information related to reference signals transmitted for channel measurement (e.g., resources, sequence, etc.). based on various embodiments, the configuration information may be generated based on temporal correlation and may indicate CSI feedback having a variable transmission rate. Specifically, based on various embodiments, the configuration information may indicate feedback of values representing the channel, e.g., latent vectors and information related to temporal correlation (e.g., Doppler information). Additionally, the configuration information may indicate feedback of values for fine-tuning the values representing the channel.

In step S3203, the UE receives reference signals. The UE receives the reference signals based on configuration information. That is, the UE may receive reference signals based on a sequence indicated by the configuration information through a resource indicated by the configuration information. Through this, the UE may obtain received values or measured values for the reference signals. The received values or measured values for the reference signals may be understood as measured information about the channel, i.e., channel information. Here, the channel information may be expressed in the time-frequency domain or in the angular-delay domain.

In step S3205, the UE generates CSI feedback information. Based on various embodiments, the CSI feedback information may be generated by at least one encoding operation on channel information represented in an image format. Here, the at least one encoding includes an inference operation using a trained neural network and is performed based on information related to the temporal correlation of the channel (e.g., Doppler information) to generate a value indicating the channel (hereinafter 'channel value'). Additionally, the at least one encoding may include entropy coding.

Since channel values are generated based on temporal correlation, information related to temporal correlation is required to restore channel information from channel values. Accordingly, based on an embodiment, CSI feedback information may further include a value indicating temporal correlation (hereinafter referred to as 'temporal correlation value') in addition to channel values. Accordingly, based on various embodiments, CSI feedback information may include a channel value as well as a temporal correlation value, and furthermore, based on various embodiments, CSI feedback information may include a side value corresponding to a channel value and a side value corresponding to a temporal correlation value. Here, the side value includes information related to a hyperprior for the channel value or the temporal correlation value. In the present disclosure, the channel value, the temporal correlation value, and the side value may be referred to as expression values, as they represent transmission signals for transmitting channel information.

In step S3207, the UE performs an operation for fine-tuning the CSI feedback information. Based on various embodiments, the UE may determine information (hereinafter referred to as "fine-tuning assistance information") for adjusting representation values including at least one of a channel value, a temporal correlation value, or at least one side value in terms of a rate-distortion trade-off. For example, the UE may determine a step size value for fine-tuning as fine-tuning assistance information for at least one of the values included in the CSI feedback information generated in step S3205. Furthermore, the UE may include the fine-tuning assistance information in the CSI feedback information. That is, the operation for fine-tuning the CSI feedback information includes the operation of determining fine-tuning assistance information for representation values used to restore a channel instance (e.g., at least one of a channel value, a temporal correlation value, a side value corresponding to the channel value, or a side value corresponding to the temporal correlation value), and the operation of including the determined fine-tuning assistance information in the CSI feedback information.

In step S3209, the UE transmits CSI feedback information. The UE may transmit CSI feedback information based on the configuration information received in step S3201. The CSI feedback information includes various feedback values, including values generated in step S3205 and fine-tuning assistance information (e.g., step size values) generated in step S3207. Based on various embodiments, the various feedback values may be transmitted through a single message or through different messages. Here, the different messages may be transmitted at different times, at different periods, and through different mechanisms.

As described with reference to FIG. 32, CSI feedback information may be transmitted. Although not shown in FIG. 32, at least one additional operation may be performed to determine the model used in the CSI feedback framework. For example, the model may be determined based on the aforementioned rate-distortion trade-off hyperparameter. For example, the UE may exchange information related to the model through a capability negotiation procedure and perform the procedure of FIG. 32 using the determined model. The determined model may be indicated through the capability negotiation procedure or through other procedures. As an example, the determined model may be indicated through the configuration information of step S3201 of FIG. 32.

FIG. 33 shows an example of a procedure for obtaining CSI based on an embodiment of the present disclosure. FIG. 33 shows a method performed by a base station.

Referring to FIG. 33, in step S3301, the base station transmits configuration information related to CSI feedback. The configuration information may include at least one of information related to reference signals transmitted for channel measurement (e.g., resources, sequence, etc.), information related to channel measurement operations, or information related to feedback (e.g., format, resources, number of feedbacks, period, etc.). based on various embodiments, the configuration information may be generated based on temporal correlation and may indicate CSI feedback having a variable transmission rate. Specifically, based on various embodiments, the configuration information may indicate feedback of values representing the channel, e.g., latent vectors and information related to temporal correlation (e.g., Doppler information). Additionally, the configuration information may indicate feedback of values for fine-tuning the values representing the channel.

In step S3303, the base station transmits reference signals. The base station transmits reference signals based on configuration information. That is, the base station may transmit reference signals based on a sequence indicated by configuration information through a resource indicated by configuration information.

In step S3305, the base station receives CSI feedback information. That is, the base station receives CSI feedback information generated based on transmitted reference signals. Based on various embodiments, the CSI feedback information may include a value indicating a channel, i.e., a channel value, generated by at least one encoding operation on channel information expressed in an image format. Here, the channel value may be generated by an encoding operation performed based on information related to the temporal correlation of the channel (e.g., Doppler information). Furthermore, based on an embodiment, the CSI feedback information may further include a value indicating temporal correlation, i.e., a temporal correlation value, in addition to the channel value. Furthermore, the CSI feedback information may include a side value corresponding to the channel value and a side value corresponding to the temporal correlation value. Here, the side value includes information about a hyperprior for the channel value or the temporal correlation value. Additionally, the CSI feedback information may further include fine-tuning assistance information for fine-tuning the representation values such as the channel value, the temporal correlation value, and the side value. Based on various embodiments, various feedback values including representation values and fine-tuning assistance information (e.g., step size values) may be received through a single message or through different messages. Here, the different messages may be received at different times, at different periods, and by different mechanisms.

In step S3307, the base station performs an operation for fine-tuning the CSI feedback information. Specifically, the base station modifies at least one of the representation values included in the CSI feedback information using fine-tuning assistance information included in the CSI feedback information. The fine-tuning assistance information includes a step size value for a latent shift for each representation value. Accordingly, the base station may modify at least one of the received representation values based on at least one step size value.

In step S3309, the base station obtains channel information. That is, the base station restores channel information based on at least one of a temporal correlation value and/or a channel value modified based on fine-tuning assistance information. Specifically, based on an embodiment, the base station may obtain Doppler information of the channel based on the modified temporal correlation value, obtain a channel latent vector based on the Doppler information and the modified channel value, and then determine channel information based on the channel latent vector. To this end, the base station may perform at least one decoding operation, and the decoding operation may include an inference operation using a trained neural network.

As described with reference to FIG. 33, channel information may be restored from CSI feedback information. Although not shown in FIG. 33, at least one additional operation may be performed to determine the model used in the CSI feedback framework. For example, the model may be determined based on the aforementioned rate-distortion trade-off hyperparameter. For example, a base station may exchange information related to the model through a capability negotiation procedure and perform the procedure of FIG. 33 using the determined model. The determined model may be indicated through the capability negotiation procedure or through other procedures. As an example, the determined model may be indicated through the configuration information of step S3301 of FIG. 33.

FIG. 34 shows an example of a procedure for obtaining CSI including fine-tuning based on an embodiment of the present disclosure. FIG. 34 is an example of CSI feedback, and a CSI feedback procedure based on various embodiments is not required to include all of the operations shown and may include only a part of the procedure described below. For example, the order of signaling may be different, some signaling may be omitted, or additional signaling other than that described may be performed. In FIG. 34, the UE 3410 is an encoder-side device and includes an encoder neural network, and the base station 3420 is a decoder-side device and includes a decoder neural network. Additionally, the UE 3410 may further include a decoder neural network.

Referring to FIG. 34, in step S3401, the UE 3410 transmits UE capability information related to λ to the base station (3420). For example, the UE capability information includes information related to the hyperparameter λ, and specifically, may indicate at least one of the maximum value, candidate values, or range of values of λ that may be supported by the UE 3410.

In step S3403, the base station 3420 determines a model for CSI feedback. For example, the base station 3420 may determine the model based on at least one of the uplink resource, or the downlink traffic load to the UE 3410.

In step S3405, the base station 3420 transmits a determined model ID or model pairing ID to the UE 3410. Accordingly, the UE 3410 may verify the determined model. And, the UE 3410 may configure the CSI encoder.

In step S3407, the base station 3420 transmits CSI-RS to the UE 3410. Prior to this, the base station 3420 may transmit configuration information related to CSI-RS to the UE 3410.

In step S3409, the UE 3410 transmits Doppler side latent information and related step size values to the base station 3420. To this end, the UE 3410 may determine an optimal step size for the Doppler side latent information. Then, the base station 3420 may perform fine-tuning on the Doppler side latent information using the step size values. Specifically, the base station 3420 may determine an adjustment amount based on the step size values and modify the value of the Doppler side latent information based on the adjustment amount. In step 3411, the UE 3410 transmits Doppler latent information to the base station 3420.

In step S3413, the UE 3410 transmits channel-side latent information and related step size values to the base station 3420. To this end, the UE 3410 may determine an optimal step size for the channel-side latent information. Then, the base station 3420 may perform fine-tuning on the channel-side latent information using the step size values. Specifically, the base station 3420 may determine an adjustment amount based on the step size values and modify the value of the channel-side latent information based on the adjustment amount.

In step S3415, the UE 3410 transmits channel latent information and related step size values to the base station 3420. To this end, the UE 3410 may determine an optimal step size for the channel latent information. Then, the base station 3420 may perform fine-tuning on the channel latent information using the step size values. Specifically, the base station 3420 may determine an adjustment amount based on the step size values and modify the value of the channel latent information based on the adjustment amount.

In step S3417, the base station 3420 restores the channel instance. Specifically, the base station 3420 may restore the channel information, i.e., the channel instance, using the modified Doppler side latent information, the received Doppler latent information, the modified channel side latent information, and the modified channel latent information.

The procedure described with reference to FIG. 34 includes an outer function and an inner function. In FIG. 34, dashed line arrows represent signaling corresponding to the outer function, and solid line arrows represent signaling corresponding to the inner function. That is, multiple inner function operations may be performed for a single outer function operation.

Based on the procedure shown in FIG. 34, in step 3411, the UE 3410 transmits Doppler latent information to the base station 3420. However, based on another embodiment, the UE 3410 may transmit a step size value related to the Doppler latent information in addition to the Doppler latent information. That is, while the embodiment of FIG. 34 excludes latent shifting for the Doppler latent information, based on another embodiment, latent shifting for the Doppler latent information may be performed. Furthermore, based on the other embodiment, latent shifting for at least one of the Doppler side latent information, channel latent information, or channel side latent information may be excluded, in which case the signaling operation of the step size value related to the corresponding information may be excluded.

Optimal step size information (e.g., ${η}_{g}^{∗} , {η}_{z}^{∗} , {η}_{y}^{∗}$) may be appropriately converted into a bit stream to be signaled via digital communication. In this case, the step size information may be quantized using a predefined index based on the range of values. The range of the step size may be configured to a linear scale or a log scale. An example of a quantization rule for the optimal step size is shown in [Table 5] below.

**[Table 4]**

| range of step size (quantization interval) | representative value |
|---|---|
| ... | ... |
| (0.00001, 0.0001] | 0.000316 |
| (0.0001, 0.001] | 0.00316 |
| (0.001, 0.01] | 0.0316 |
| (0.01, 0.1] | 0.316 |
| ... | ... |

The examples in [Table 4] are merely embodiments, and quantization rules may be defined differently based on various embodiments, and the scope of rights is not limited to the format of [Table 4]. For example, [Table 4] uses a logarithmic scale for interval configuration, but a linear scale may be used. Quantization rules such as those in [Table 4] must be agreed upon in advance between the UE and the base station, and quantization rules for the optimal step size may be defined differently based on ${η}_{g}^{∗} , {η}_{z}^{∗}$, and ${η}_{y}^{∗}$.

Based on the various embodiments described above, the channel feedback model may be adjusted considering the downlink traffic load and/or uplink resource conditions. Additionally, by fine-tuning the signal transmitted from the encoder side to the decoder side in terms of rate-distortion, it is possible to further conserve rate and improve channel reconstruction performance.

It is clear that the examples of the proposed methods described above may also be considered as a type of proposed method, as they may be included as one of the implementation methods of the present disclosure. Furthermore, the proposed methods described above may be implemented independently, but they may also be implemented in the form of a combination (or merge) of some of the proposed methods. Information related to the applicability of the proposed methods (or information related to the rules of the proposed methods) may be defined by a rule such that the base station notifies the UE of the application of the proposed methods through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

### INDUSTRIAL AVAILABILITY

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a user equipment (UE) in a wireless communication system, the method comprising:
receiving configuration information related to channel state information (CSI) feedback;
receiving reference signals based on the configuration information;
generating CSI feedback information based on the reference signals; and
transmitting the CSI feedback information,
wherein the CSI feedback information includes channel information determined based on the reference signals, information related to temporal correlation of the channel information, and information for fine-tuning the channel information and the information related to the temporal correlation.

2. The method of claim 1, further comprising:
transmitting capability information related to the CSI feedback,
wherein the capability information includes information for determining a rate-distortion trade-off hyperparameter included in a loss function of a model for the CSI feedback.

3. The method of claim 1, wherein the configuration information includes identification information of a model corresponding to a rate-distortion trade-off hyperparameter included in a loss function of a model for the CSI feedback, or information related to a maximum payload size determined based on the rate-distortion trade-off hyperparameter.

4. The method of claim 1, wherein the CSI feedback information includes a part 1 CSI and a part 2 CSI, and
wherein the part 1 CSI includes information related to the rate-distortion trade-off hyperparameter.

5. The method of claim 1, wherein the information for fine-tuning includes information related to a step size for a latent shift of at least one of the channel information, the information related to the temporal correlation, or side information for the channel information.

6. The method of claim 1, wherein transmitting the CSI feedback information comprises: transmitting sequentially Doppler side latent information, Doppler latent information, channel side latent information, channel latent information.

7. The method of claim 1, wherein the channel information includes a result of entropy coding for a latent vector of a first channel instance measured using the reference signals.

8. The method of claim 7, wherein the CSI feedback information includes, as side information, hierarchical prior information determined based on the latent vector of the first channel instance.

9. The method of claim 7, wherein the entropy coding is performed using an entropy model determined based on a hierarchical prior related to a channel determined based on the latent vector of the first channel instance and a temporal prior determined based on Doppler information related to a channel.

10. The method of claim 9, wherein the temporal prior is determined based on context information determined based on the Doppler information and a channel instance restored from a latent vector of a second channel instance measured at a previous time point.

11. The method of claim 1, wherein the information related to the temporal correlation includes a result of entropy coding for a latent vector of Doppler information estimated based on the first channel instance.

12. The method of claim 11, further comprising:
estimating the Doppler information based on the first channel instance measured at a current time point and a channel instance restored from a latent vector of a second channel instance measured at a previous time point.

13. The method of claim 11, wherein the CSI feedback information includes hierarchical prior information related to the latent vector of the Doppler information.

14. The method of claim 1, wherein generating the CSI feedback information comprises:
estimating Doppler information for a channel;
generating a latent vector of the Doppler information;
generating context information based on the latent vector of the Doppler information;
generating, based on the context information, a latent vector of a first channel instance measured using the reference signals; and
performing entropy coding and quantization for the latent vector of the first channel instance based on the context information.

15. The method of claim 14, wherein the first channel instance includes information expressed in one of an image format in an angular-delay domain, a 3D tensor format in a 2D space-1D frequency domain, or a tensor format in a 3D angular-delay domain including an elevation angle, an azimuth angle, and a tap of delay.

16. A method performed by a base station in a wireless communication system, the method comprising:
transmitting configuration information related to channel state information (CSI) feedback;
transmitting reference signals based on the configuration information;
receiving CSI feedback information based on the reference signals; and
restoring channel information based on the CSI feedback information,
wherein the CSI feedback information includes the channel information determined based on the reference signals, information related to temporal correlation of the channel information, and information for fine-tuning the channel information and the information related to the temporal correlation.

17. The method of claim 16, wherein the information for fine-tuning includes information related to a step size for a latent shift of at least one of the channel information, the information related to the temporal correlation, or side information for the channel information.

18. The method of claim 17, wherein restoring the channel information comprises: performing, based on the information related to the step size, a latent shift on at least one of the channel information, the information related to the temporal correlation, or the side information for the channel information.

19. A UE in a wireless communication system, comprising:
a transceiver; and
a processor connected to the transceiver,
wherein the processor is configured to:
receive configuration information related to channel state information (CSI) feedback;
receive reference signals based on the configuration information;
generate CSI feedback information based on the reference signals; and
transmit the CSI feedback information,
wherein the CSI feedback information includes channel information determined based on the reference signals, information related to temporal correlation of the channel information, and information for fine-tuning the channel information and the information related to the temporal correlation.

20. A base station in a wireless communication system, comprising:
a transceiver; and
a processor connected to the transceiver,
wherein the processor is configured to:
transmit configuration information related to channel state information (CSI) feedback;
transmit reference signals based on the configuration information;
receive CSI feedback information based on the reference signals; and
restore channel information based on the CSI feedback information,
wherein the CSI feedback information includes the channel information determined based on the reference signals, information related to temporal correlation of the channel information, and information for fine-tuning the channel information and the information related to the temporal correlation.

21. A communication device comprising:
at least one processor;
at least one computer memory connected to the at least one processor and storing instructions for instructing operations based on being executed by the at least one processor, wherein the operations comprise:
receiving configuration information related to channel state information (CSI) feedback;
receiving reference signals based on the configuration information;
generating CSI feedback information based on the reference signals; and
transmitting the CSI feedback information,
wherein the CSI feedback information includes channel information determined based on the reference signals, information related to temporal correlation of the channel information, and information for fine-tuning the channel information and the information related to the temporal correlation.

22. A non-transitory computer-readable medium storing at least one instruction, comprising: the at least one instruction executable by a processor, wherein the at least one instruction controls a device to:
receive configuration information related to channel state information (CSI) feedback;
receive reference signals based on the configuration information;
generate CSI feedback information based on the reference signals; and
transmit the CSI feedback information,
wherein the CSI feedback information includes channel information determined based on the reference signals, information related to temporal correlation of the channel information, and information for fine-tuning the channel information and the information related to the temporal correlation.
